(19) Europäisches Patentamt
European Patent Office
Office européen des brevets

(11) **EP 3 057 192 B1**

(12) **EUROPEAN PATENT SPECIFICATION**

(45) Date of publication and mention
of the grant of the patent:
**03.01.2018 Bulletin 2018/01**

(51) Int Cl.:
***H02J 3/30*** *(2006.01)*      ***H02J 3/38*** *(2006.01)*

(21) Application number: **15171679.2**

(22) Date of filing: **11.06.2015**

(54) **AN ENERGY INTERNET AND A HIERARCHICAL CONTROL SYSTEM AND A CONTROL METHOD THEREOF**

ENERGIEINTERNET UND HIERARCHISCHES STEUERUNGSSYSTEM UND STEUERUNGSVERFAHREN DAFÜR

INTERNET À ÉNERGIE, SYSTÈME DE COMMANDE HIÉRARCHIQUE ET SON PROCÉDÉ DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.02.2015 CN 201510076905**

(43) Date of publication of application:
**17.08.2016 Bulletin 2016/33**

(73) Proprietor: **Northeastern University**
**Shenyang Liaoning 110819 (CN)**

(72) Inventors:
- **Sun, Qiu Ye**
 **110819 Shenyang City Liaoning Province (CN)**
- **Zhang, Hua Guang**
 **110819 Shenyang City Liaoning Province (CN)**
- **Ma, Da Zhong**
 **110819 Shenyang City Liaoning Province (CN)**
- **Huang, Bo Nan**
 **110819 Shenyang City Liaoning Province (CN)**
- **Teng, Fei**
 **110819 Shenyang City Liaoning Province (CN)**
- **Liu, Zhen Wei**
 **110819 Shenyang City Liaoning Province (CN)**
- **Wei, Qing Lai**
 **110819 Shenyang City Liaoning Province (CN)**
- **Song, Rui Zhuo**
 **110819 Shenyang City Liaoning Province (CN)**
- **Xie, Xiang Peng**
 **110819 Shenyang City Liaoning Province (CN)**
- **Chen, Lei**
 **110819 Shenyang City Liaoning Province (CN)**

(74) Representative: **Office Kirkpatrick**
**Avenue Wolfers, 32**
**1310 La Hulpe (BE)**

(56) References cited:
**EP-A- 2 645 522**     **US-A1- 2012 326 641**

- **A Q HUANG ET AL: "The Future Renewable Electric Energy Delivery and Management (FREEDM) System: The Energy Internet",** PROCEEDINGS OF THE IEEE., vol. 99, no. 1, 1 January 2011 (2011-01-01), pages 133-148, XP055250528, US ISSN: 0018-9219, DOI: 10.1109/JPROC.2010.2081330

## Description

## Technical Field

The present invention belongs to the field of energy internet control and electrical technology, in particular relates to an energy internet and a hierarchical control system and a control method thereof.

## Background

At present, it is commonly believed that full exploitation and utilization of green energy and renewable energy is an effective way to solve the problems of energy crisis, greenhouse effect and environmental pollution. However, the power generation features of renewable energy and the defects of traditional power grid cause renewable energy to be unable to be accessed into power grid. In addition, there is also a problem that it is difficult for the power grid to perceive fine change of loads, so the power grid cannot follow the change of loads well and thus cannot meet higher and higher requirements of users for quality of electric energy. For full exploitation and utilization of renewable distributed energy such as solar energy, wind energy, bioenergy, etc., distributed power generation is realized around users, and the power grid is accessed in the form of energy internet to ensure safe utilization of energy, reduce environmental pollution and solve the problem that change of loads of the power grid cannot be tracked. However, because energy between the energy internet and the distribution grid is in bidirectional flow, and the distributed generation itself has the characteristics of intermittent and fluctuation, the prior art cannot realize coordinated optimization as well as intelligent control on distributed energy, distributed energy storage devices and local loads in the energy internet, and cannot guarantee safe and stable operation of the power grid after the energy internet with new high-capacity distributed energy is accessed into the distribution grid, thus the energy internet with high-capacity distributed power and the control method thereof need further research. Document A Q Huang ET AL: "The Future Renewable Electric Energy Delivery and Management (FREEDM) System: The Energy Internet",PROCEEDINGS OF THE IEEE., vol. 99, no. 1, 1 January 2011 (2011-01-01), pages 133-148 discloses an energy network structure (energy internet) comprising energy router modules, energy switch modules and energy subnet modules comprising energy generators/ energy loads/energy storage devices which are connected with each other in a hierarchical manner. Network parameters various network nodes like voltage/current/active power/reactive power are determined; based on the determined network parameters, it is determined whether there is energy balance in the energy network. If there is a shortage of energy in the network, energy is transferred from the energy storage devices to the network. If there is a surplus of energy in the network, energy is transferred from the network to energy storage devices. Different storage devices (battery, flywheel) are used.

## Summary

Aiming at the defects of the prior art, the present invention provides a control method of a hierarchical control system of an energy internet according to claim 1.

The present invention has the following technical schemes:

An energy internet comprises an energy router module, an energy switch module and an energy subnet module.

The energy router module comprises at least one energy router; the energy switch module comprises at least one energy switch; the energy subnet module comprises at least one energy subnet; all energy routers, energy switches and energy subnets are independent of each other; the input end of the energy router is connected to a distribution grid, and the output end of the energy router is connected with one input end of the energy switch or simultaneously connected with the input ends of a plurality of energy switches; the output end of the energy switch is connected with an energy subnet or simultaneously connected with a plurality of energy subnets.

The energy subnet comprises at least one distributed generation, at least one distributed energy storage device and at least one local load; the distributed generation, the distributed energy storage device and the local load are connected with the output end of the energy switch corresponding to the energy subnet which the distributed generation, the distributed energy storage device and the local load belong to.

The energy router further comprises a first processor and a flywheel power regulator, wherein the first processor is used for collecting node voltage and node current of each distributed generation in the energy internet, node voltage and node current of each local load, and active power and reactive power of each distributed energy storage device, and predicting gross power generation and gross load in the energy internet by the neural network method; energy balance in the energy internet is judged in accordance with the predicted values for power generation and load; when energy balance is achieved in the energy internet, a frequency voltage regulation control instruction is sent to the corresponding energy switch; when energy balance is not achieved in the energy internet, whether the electricity of the energy internet is surplus or insufficient is judged; when the electricity of the energy internet is insufficient, a control signal is sent to the distributed energy storage device to start it to supply electric energy to the energy internet; after the distributed energy storage device completes supply of electric energy and if the electricity of the energy internet is still insufficient, a control signal is sent to the distribution grid to make it supply electric energy to the energy internet; if the distribution grid cannot supply electric energy to the energy internet or the electricity of the energy internet is still insufficient after the distribution grid completes supply of electric energy, the flywheel power regulator is started to supply electric energy to the energy internet; when the electricity of the energy internet is surplus, a control signal is sent to the distributed generation to make it supply power to the distribution grid; if the distribution grid does not need supply of electric energy or the electric energy is still surplus in the energy internet after supply of electric energy to the distribution grid is completed, the distributed energy storage device makes a response for whether to need supply of power; if the distributed energy storage device needs supply of power, it is started to be supplied; if the distributed energy storage device does not need supply of power or the electric energy is still surplus in the energy internet after supply of electric energy to the distributed energy storage device is completed, the flywheel power regulator is started to consume excess electric energy in the energy internet.

The energy switch further comprises a second processor which is used for collecting node frequency, voltage, active power and reactive power of each distributed generation and local load in the energy subnet connected with the energy switch, accepting the frequency voltage regulation control instruction to regulate the node frequency and node voltage of the distributed generation and the local load in the energy subnet connected with the energy switch to keep each node frequency consistent with the power frequency of the distribution grid and each node voltage consistent with the rated voltage of the distribution grid.

The distributed generation, the distributed energy storage device and the local load are connected with the output end of the energy switch corresponding to the energy subnet, to which the distributed generation, the distributed energy storage device and the local load belong, through hot plug interfaces.

The energy switch is further classified into:

Type I energy switch used for controlling energy subnets with different kinds of power consumptions;
Type II energy switch used for controlling energy subnets with the same kind of power consumption.

According to the intelligent electric energy control system, the energy prediction unit further comprises:

A power generation prediction module, which is used for predicting gross power generation in the energy internet by the neural network method according to the node voltage and node current of each distributed generation;
A load prediction module, which is used for predicting gross load in the energy internet by the neural network method according to the node voltage and node current of each local load.

The energy balance control unit further comprises:

An insufficient electricity supply control module, which is used for sending a control signal to the distributed energy storage device to start it to supply electric energy when the electricity in the energy internet is insufficient; if the electricity in the energy internet is still insufficient after the distributed energy storage device completes supply of electric energy, the insufficient electricity supply control module sends a control signal to the distribution grid to make it supply power to the energy internet; if the distribution grid cannot supply electric energy to the energy internet or the electricity in the energy internet is still insufficient after the distribution grid completes supply of electric energy, an electric energy supply control signal is sent to the power state regulation module;
A surplus electricity allocation control module, which is used for sending a control signal to the distributed generation to make it supply power to the distribution grid when the electricity in the energy internet is surplus; if the distribution grid does not need supply of electric energy or the electric energy is still surplus in the energy internet after supply of electric energy to the distribution grid is completed, the distributed energy storage device makes a response for whether to need supply of power; if the distributed energy storage device needs supply of power, it is started to be supplied; if the distributed energy storage device does not need supply of power or the electric energy is still surplus in the energy internet after supply of electric energy to the distributed energy storage device is completed, an electric energy consumption control signal is sent to the power state regulation module.

In Step 5 of the control method, electric energy is supplied to the energy internet in the following specific steps:

Step 5.1: Calculating the initial insufficient electricity in the energy internet, i.e., the difference $W_E = W_L - W_G$ between the predicted value $W_L$ for gross load of the local load and the predicted value $W_G$ for gross power generation of the distributed generation in the energy internet, and sending a control signal to each distributed energy storage device in the energy internet to start the distributed energy storage device to supply electric energy to the energy internet; assuming the supplied electricity to be $W_{Storage}$.

Step 5.2: Judging whether the electric energy in the energy internet is still insufficient after the distributed energy storage device completes supply of electric energy, i.e., whether $W_{StorageE} > 0$, wherein $W_{StorageE} = W_E - W_{Storage}$; if yes, sending a control signal to the distribution grid to make it supply electric energy to the energy internet, and assuming the supplied electricity to be $W_{Grid-Storage}$; if no, executing Step 7.

Step 5.3: Judging whether the electric energy in the energy internet is still insufficient after the supply of electric energy to the distribution grid is completed, i.e., whether $W_{Grid-StorageE} > 0$, wherein $W_{Grid-StorageE} = W_{StorageE} - W_{Grid-Storage}$; if yes, sending a control signal to the flywheel power regulator to make it supply electric energy to the energy internet, and executing Step 7 when the supply electricity is $W_{Grid-StorageE}$; if no, executing Step 7.

In Step 6 of the control method, surplus electric energy is allocated in the energy internet in the following specific steps:

Step 6.1: Calculating the initial surplus electricity in the energy internet, i.e., the difference $W_S = W_G - W_L$ between $W_G$ and $W_L$.

Step 6.2: Letting the distribution grid make a response for whether to need supply of electric energy; if yes, making the energy internet supply power to the distribution grid, and then executing Step 6.3; if no, executing Step 6.4.

Step 6.3: Judging whether the electric energy is still surplus after supply of electric energy to the distribution grid is completed, i.e., whether $W_{SG} > 0$, wherein $W_{SG} = W_S - W_{Grid}$, and $W_{Grid}$ is the electricity supplied to the distribution grid; if yes, executing Step 6.4; if no, executing Step 7.

Step 6.4: Calculating the State Of Charge $SOC$ of the distributed energy storage device in the energy internet; if $SOC = 1$, the distributed energy storage device is in full energy, then executing Step 6.6; otherwise, supplying power to the distributed energy storage device, assuming the supplied electricity to be $W_{SStorage}$, and executing Step 6.5.

Step 6.5: Judging whether the electric energy is still surplus in the energy network after supply of electric energy to the distributed energy storage device is completed, i.e., whether $W_{SS} > 0$, wherein if Step 6.3 is not executed, then $W_{SS} = W_S - W_{SStorage}$; if Step 6.3 is executed, then $W_{SS} = W_{SG} - W_{SStorage}$; if yes, executing Step 6.6; if no, executing Step 7.

Step 6.6: Making the flywheel power regulator consume excess electric energy in the energy internet until energy balance is achieved in the energy internet, and then executing Step 7.

Beneficial effects: The energy internet and the hierarchical control system and control method thereof provided by the present invention has the following advantages:

1) The present invention realizes safe and effective use of high-capacity renewable distributed energy through energy internet structure, which solves the problems such as energy crisis, greenhouse effect and environmental pollution that must be solved.

2) The present invention ensures the stability of the distributed power generation system and the high utilization of renewable energy to a maximum extent by reasonably monitoring all distributed generations and local loads in the energy internet and predicting power generation/load through hierarchical control on the energy internet as well as optimizing electric energy in the energy internet using the energy router.

3) The present invention adopts a multi-agent consensus algorithm and a drooping control method for cooperative control on each device in the energy subnet to realize consistency between the node frequency of each device in the energy subnet and the power frequency of the distribution grid, stabilization of node voltage, and power balance, and ensure high quality of electric energy output by the energy subnet, thus realizing plug and play of the whole energy internet, supporting safe and stable operation of the distribution grid, and enhancing the reliability of the distribution grid.

## Description of Figures

Figure 1 is the structural diagram of the energy internet for one embodiment of the present invention.

Figure 2 is the detailed structural diagram of the energy internet for one embodiment of the present invention.

Figure 3 is the structural diagram of the hierarchical control system of the energy internet for one embodiment of the present invention.

Figure 4 is the flow chart of the hierarchical control system of the energy internet for one embodiment of the present invention.

Figure 5 is the structural diagram of the power generation prediction neural network for one embodiment of the present invention.

Figure 6 is the curve of the predicted power generation of the energy internet for one embodiment of the present invention.

Figure 7 is the structural diagram of the load prediction neural network for one embodiment of the present invention.

Figure 8 is the curve of the predicted load of the energy internet for one embodiment of the present invention.

Figure 9 is the flow chart of the frequency and voltage control method for devices in the energy subnet for one embodiment of the present invention.

Figure 10 is the curves of node frequencies in the energy subnet for one embodiment of the present invention.

Figure 11 is the curves of active power of nodes in the energy subnet for one embodiment of the present invention.

Figure 12 is the curves of node voltages in the energy subnet for one embodiment of the present invention.

Figure 13 is the curves of reactive power of nodes in the energy subnet for one embodiment of the present invention.

These figures show distribution grid S1 ,1# transformer S2, 2# transformer S3, n# transformer S4, 1# general bus S5, 2# general bus S6, n# general bus S7, energy router module S8, 1# energy router S9, 2# energy router S10, n# energy router S11, energy switch module S12, 1# Type II energy switch S13, 1# Type I energy switch S14, m# Type II energy switch S15, 2# Type I energy switch S16, n# Type II energy switch S17, energy subnet module S18, k# energy subnet S19, n+1# energy subnet S20, n+q# energy subnet S21, l# energy subnet S22, m# energy subnet S23, (n+s)# energy subnet S24, (n+t)# energy subnet S25, p# energy subnet S26, n# energy subnet S27, N# energy subnet S28, 1# energy subnet S29, hot plug interface unit S30, D1# hot plug interface S31, D2# hot plug interface S32, C1# hot plug interface S33, C2# hot plug interface S34, F1# hot plug interface S35, F2# hot plug interface S36, distributed generation unit S37, 1# distributed generation S38, 2# distributed generation S39, distributed energy storage device unit S40, 1# distributed energy storage device S41, 2# distributed energy storage device S42, local load unit S43, 1# local load S44, 2# local load S45, solid state transformer S46, flywheel power regulator S47, first processor S48, second processor S49, signal modulation circuit S50, DSP power supply management module S51, register module S52, communication module S53, data collection module S54, energy prediction unit S55, power prediction module S56, load prediction module S57, energy balance judgment module S58, frequency voltage regulation module S59, energy surplus-deficit judgment module S60, energy balance control unit S61, insufficient electricity supply control module S62, surplus electricity allocation control module S63, power state regulation module S64, and 1# subnet bus S65.

## Detailed Description

One embodiment of the present invention is detailed in combination with the figures.

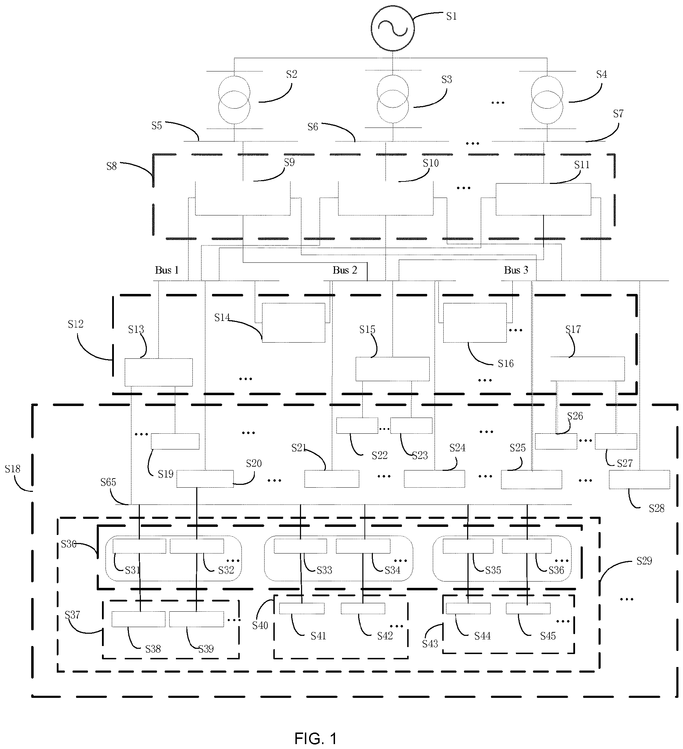

The energy internet for the embodiment is shown in Figure 1, comprising an energy router module S8, an energy switch module S12 and an energy subnet module S18; the energy subnet module S18 is connected with the distribution grid S1 through the energy switch module S12 and the energy router module S8 in sequence, wherein the energy router module S8 comprises n energy routers; the energy switch module S12 comprises a plurality of Type I energy switches and a plurality of Type II energy switches; the energy subnet module S18 comprises N energy subnets; all energy routers, energy switches and energy subnets are independent of each other; each energy subnet (1# energy subnet S29 shown in Figure 1) comprises a hot plug interface unit S30, a distributed generation unit S37, a distributed energy storage device unit S40 and a local load unit S43 ; the distributed generation unit S37 comprises at least one distributed generation; the distributed energy storage device unit S40 comprises at least one distributed energy storage device; the local load unit S43 comprises at least one local load; the hot plug interface unit S30 comprises hot plug interfaces with the number equal to the sum of the distributed generations, distributed energy storage devices and local loads in the energy subnet that the hot plug interface unit S30 belongs to; the hot plug interface is a plug and play interface, which is used for realizing plug and play of the distributed generations, distributed energy storage devices and local loads in the energy subnet.

In the embodiment, the input end of each energy router in the energy router module S8 is connected with the output end of the distribution grid S1 through a transformer and a general bus; as shown in Figure 1, the output end of the distribution grid S1 is connected with the input ends of n independent energy routers in the energy router module S8 though n independent transformers (1# transformer S2, 2# transformer S3 to n# transformer S4 in Figure 1) and n disconnected general buses (1# general bus S5, 2# general bus S6 to n# general bus S7 in Figure 1); as shown in Figure 1, the input ends of the 1# energy router S9, 2# energy router S10 and n# energy router S11 are respectively connected with the output end of the distribution grid S1 through the 1# general bus S5 and 1# transformer S2, 2# general bus S6 and 2# transformer S3 as well as n# general bus S7 and n# transformer S4; each energy router in the embodiment has an input end connected with the distribution grid S1, a three-phase AC output end, a single-phase AC output end and a DC output end; the energy router is connected with the input end of the corresponding energy switch through the three-phase AC output end and Bus 1, or the single-phase AC output end and Bus 2, or the DC output end and Bus 3, or the energy router is simultaneously connected with the input ends of a plurality of energy switches through the three-phase AC output end and Bus 1, the single-phase AC output end and Bus 2, and the DC output end and Bus 3; wherein Bus 1, Bus 2 and Bus 3 are respectively a section of a three-phase AC bus, a single-phase AC bus and a DC bus.

The output end of the energy switch in the embodiment is connected with the input end of the corresponding energy subnet in the energy subnet module S18; The energy switch in the embodiment is further classified into: Type I energy switch which is used for controlling energy subnets with different kinds of power consumptions, regulating each node frequency and node voltage in each energy subnet to keep them consistent with the power frequency and rated voltage of the distribution grid, and transforming electric energy form to realize electric energy transmission between energy subnets with different kinds of power consumptions; Type II energy switch which is used for controlling energy subnets with the same kind of power consumption, regulating each node frequency and node voltage in each energy subnet to keep them consistent with the power frequency and rated voltage of the distribution grid, and realizing electric energy transmission between energy subnets with the same kind of power consumption; For example, in Figure 1, the power consumption of the n+1# energy subnet S20 controlled by 1# Type I energy switch S14 is three-phase alternating current, while the power consumption of the n+q# energy subnet S21 controlled by 1# Type I energy switch S14 is single-phase alternating current; the power consumption of the 1# energy subnet S29 to k# energy subnet S19 controlled by 1# Type II energy switch S13 is three-phase alternating current.

Each distributed generation, each distributed energy storage device and each local load in each energy subnet in the embodiment are connected with the output end of the energy switch corresponding to the energy subnet, to which the distributed generation, the distributed energy storage device and the local load belong, through corresponding hot plug interfaces and subnet buses. For example, in the distributed generation unit S37 in the 1# energy subnet S29 shown in Figure 1, the input end of the 1# distributed generation S38 is connected with the output end of the 1# Type II energy switch S13 through a D1# hot plug interface S31 and a 1# subnet bus S65, and the input end of the 2# distributed generation S39 is connected with the output end of the 1# Type II energy switch S13 through a D2# hot plug interface S32 and a 1# subnet bus S65; in the distributed energy storage device unit S40 in the 1# energy subnet S29, the input end of the 1# distributed energy storage device S41 is connected with the output end of the 1# Type II energy switch S13 through a C1# hot plug interface S33 and a 1# subnet bus S65, and the input end of the 2# distributed energy storage device S42 is connected with the output end of 1# Type II energy switch S13 through a C2# hot plug interface S34 and a 1# subnet bus S65; in the local load unit S43 in the 1# energy subnet S29, the input end of the 1# local load S44 is connected with the output end of the 1# Type II energy switch S13 through a F1# hot plug interface S35 and a 1# subnet bus S65, and the input end of the 2# local load S45 is connected with the output end of 1# Type II energy switch S13 through a F2# hot plug interface S36 and a 1# subnet bus S65.

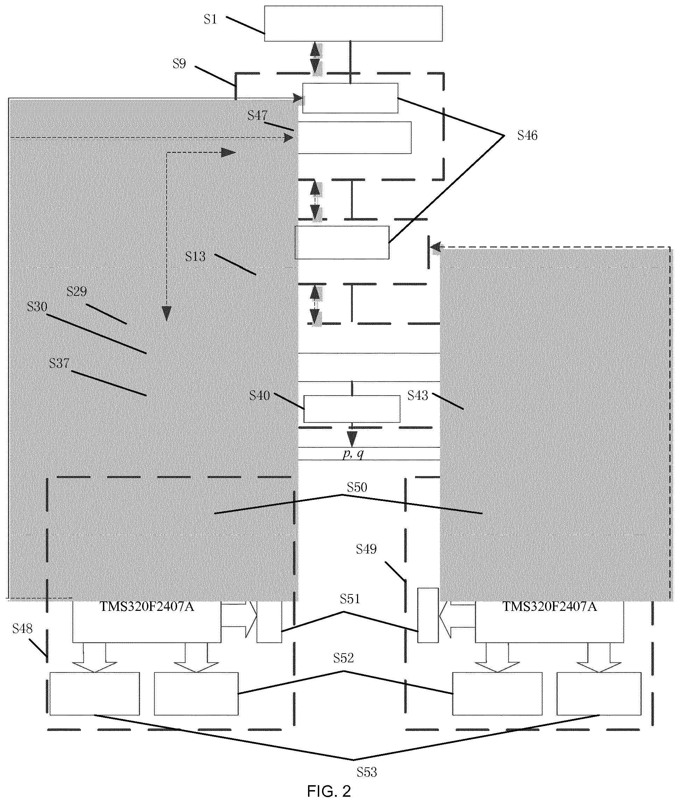

As shown in Figure 2, using the 1# energy switch S9, the 1# Type II energy switch S13 connected with the 1# energy switch S9, and the 1# energy subnet S29 controlled by the 1# energy switch S9 as an example, the energy router further comprises a solid state transformer S46, a first processor S48 and a flywheel power regulator S47, wherein the solid state transformer is used for transforming the power frequency alternating current output by the distribution grid into three-phase alternating current, single-phase alternating current or direct current required for the energy internet, and also transforming three-phase alternating current, single-phase alternating current or direct current in the energy internet into electric energy form required for the distribution grid; the first processor is used for collecting node voltage and node current of each distributed generation in the energy internet, node voltage and node current of each local load, and active power and reactive power of each distributed energy storage device, and predicting gross power generation and gross load in the energy internet by the neural network method; energy balance in the energy internet is judged in accordance with the predicted values for power generation and load; when energy balance is achieved in the energy internet, a frequency voltage regulation control instruction is sent to the corresponding energy switch; when energy balance is not achieved in the energy internet, whether the electricity of the energy internet is surplus or insufficient is judged; when the electricity of the energy internet is insufficient, a control signal is sent to the distributed energy storage device to start it to supply electric energy; if the electricity of the energy internet is still insufficient after the distributed energy storage device completes supply of electric energy, a control signal is sent to the distribution grid to make it supply electric energy to the energy internet; if the distribution grid cannot supply electric energy to the energy internet or the electricity of the energy internet is still insufficient after the distribution grid completes supply of electric energy, the flywheel power regulator is started to supply electric energy to the energy internet; when the electricity of the energy internet is surplus, a control signal is sent to the distributed generation to make it supply power to the distribution grid; if the distribution grid does not need supply of electric energy or the electric energy is still surplus in the energy internet after supply of electric energy to the distribution grid is completed, the distributed energy storage device makes a response for whether to need supply of power; if the distributed energy storage device needs supply of power, it is started to be supplied; if the distributed energy storage device does not need supply of power or the electric energy is still surplus in the energy internet after supply of electric energy to the distributed energy storage device is completed, the flywheel power regulator is started to consume excess electric energy in the energy internet.

As shown in Figure 2, the energy switch in the embodiment further comprises a solid state transformer S46 and a second processor S49, wherein the second processor is used for collecting node frequency, voltage, active power and reactive power of each distributed generation and local load in the energy subnet connected with the energy switch, accepting the frequency voltage regulation control instruction to regulate the node frequency and node voltage of the distributed generation and the local load in the energy subnet connected with the energy switch to keep each node frequency consistent with the power frequency of the distribution grid and each node voltage consistent with the rated voltage of the distribution grid.

As shown in Figure 2, the first processor S48 and the second processor S49 in the embodiment have the same structure, and each consists of a signal modulation circuit S50, a DSP chip with the type of TMS320F2407A, a peripheral DSP power supply management module S51 of the DSP chip, a register module S52, and a communication module S53, wherein the register module S52 uses a memory with the type of IS61LV16416, and the type of the communication module S53 is MAX485. The corresponding data collected in the energy subnet is sent to the DSP chip after being processed by the signal modulation circuit.

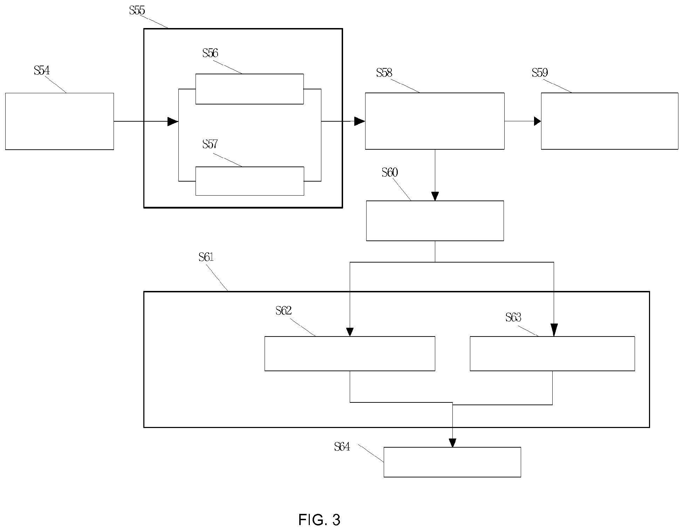

The embodiment provides a hierarchical control system of an energy internet, as shown in Figure 3, comprising: a data collection module S54, which is used for collecting node frequency, node voltage, node current, active power and reactive power of each distributed generation and local load in the energy internet, and active power and reactive power of each distributed energy storage device;

An energy prediction unit S55, which is used for predicting gross power generation and gross load in the energy internet, and can further comprise a power generation prediction module S56 for predicting gross power generation in the energy internet by the neural network method according to the node voltage and node current of each distributed generation; a load prediction module S57 for predicting gross load in the energy internet by the neural network method according to the node voltage and node current of each local load;

An energy balance judgment module S58, which is used for judging energy balance in the energy internet in accordance with the predicted values for power generation and load; when energy balance is not achieved in the energy internet, a corresponding control instruction is sent to an energy surplus-deficit judgment module; when energy balance is achieved in the energy internet, a corresponding control instruction is sent to a frequency voltage regulation module;

An energy surplus-deficit judgment module S60, which is used for accepting the control instruction sent by the energy balance judgment module to judge whether the electricity in the energy internet is surplus or insufficient and sending the judging result to an energy balance control unit;

An energy balance control unit S61, which is used for sending a control signal to the distributed energy storage device or the distribution grid to make it supply electric energy to the energy internet when the electricity in the energy internet is insufficient, or sending an electric energy supply control signal to a power state regulation module after the distributed energy storage device and the distribution grid complete supply of electric energy; or which is used for sending a control signal to the distributed generation to make it supply power to the distribution grid or supply electric energy to the distributed energy storage device when the electricity in the energy internet is surplus, or sending an electric energy consumption control signal to the power state regulation module when the distribution grid does not need supply of electric energy and the distributed energy storage device is in full energy; it can further comprise an insufficient electricity supply control module S62, which is used for sending a control signal to the distributed energy storage device to start it to supply electric energy when the electricity in the energy internet is insufficient; if the electricity in the energy internet is still insufficient after the distributed energy storage device completes supply of electric energy, the insufficient electricity supply control module sends a control signal to the distribution grid to make it supply power to the energy internet; if the electricity in the energy internet is still insufficient after the distribution grid completes supply of electric energy, an electric energy supply control signal is sent to the power state regulation module; a surplus electricity allocation control module S63, which is used for sending a control signal to the distributed generation to make it supply power to the distribution grid when the electricity in the energy internet is surplus; if the distribution grid does not need supply of electric energy or the electric energy is still surplus in the energy internet after supply of electric energy to the distribution grid is completed, the distributed energy storage device makes a response for whether to need supply of power; if the distributed energy storage device needs supply of power, it is started to be supplied; otherwise, if the distributed energy storage device does not need supply of power or the electric energy is still surplus in the energy internet after supply of electric energy to the distributed energy storage device is completed, an electric energy consumption control signal is sent to the power state regulation module;

A power state regulation module S64, which is used for accepting the electric energy supply control signal or the electric energy consumption control signal, and sending a corresponding control signal to the flywheel power regulator to make it supply electric energy to the energy internet or consume excess electric energy in the energy internet;

A frequency voltage regulation module S59, which is used for accepting the control instruction from the energy balance judgment module, and regulating the node frequency and node voltage of each corresponding distributed generation and local load in the energy subnet to keep each node frequency consistent with the power frequency of the distribution grid and each node voltage consistent with the rated voltage of the distribution grid.

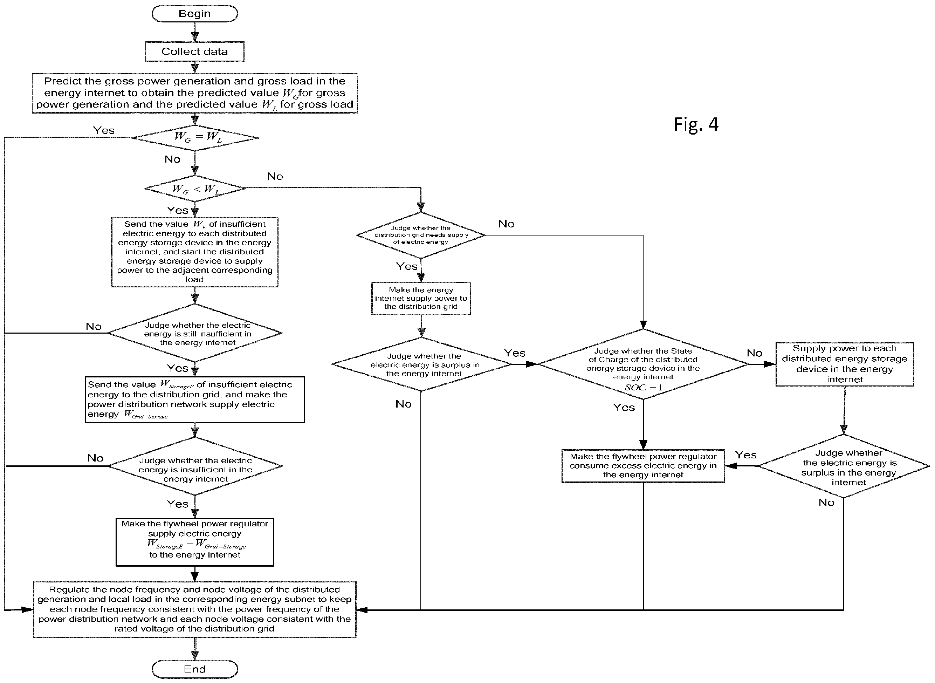

In the embodiment, the control method using the hierarchical control system of the energy internet shown in Figure 3 comprises the following specific steps, as shown in Figure 4:

Step 1: Collecting data.

Comprising node frequency, node voltage, node current, active power and reactive power of each distributed generation and local load in the energy internet, and active power and reactive power of each distributed energy storage device;

Expressing the collected voltage and current data in a matrix form, as shown in the following formula:

$$
\begin{bmatrix} \dot{U}_1 \\ \dot{U}_2 \\ \vdots \\ \dot{U}_N \end{bmatrix} = \begin{bmatrix} Z_{11} & Z_{12} & \cdots & Z_{1N} \\ Z_{21} & Z_{22} & \cdots & Z_{2N} \\ \vdots & \vdots & & \vdots \\ Z_{N1} & Z_{N2} & \cdots & Z_{NN} \end{bmatrix} \begin{bmatrix} \dot{I}_1 \\ \dot{I}_2 \\ \vdots \\ \dot{I}_N \end{bmatrix}
$$

Step 2: Predicting gross power generation and gross load in the energy internet by the neural network method according to the node current and node voltage of each distributed generation and local load.

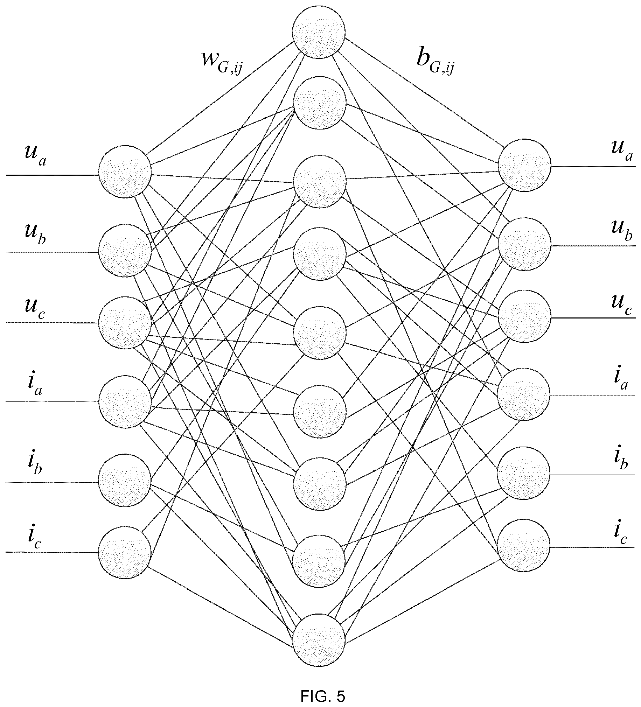

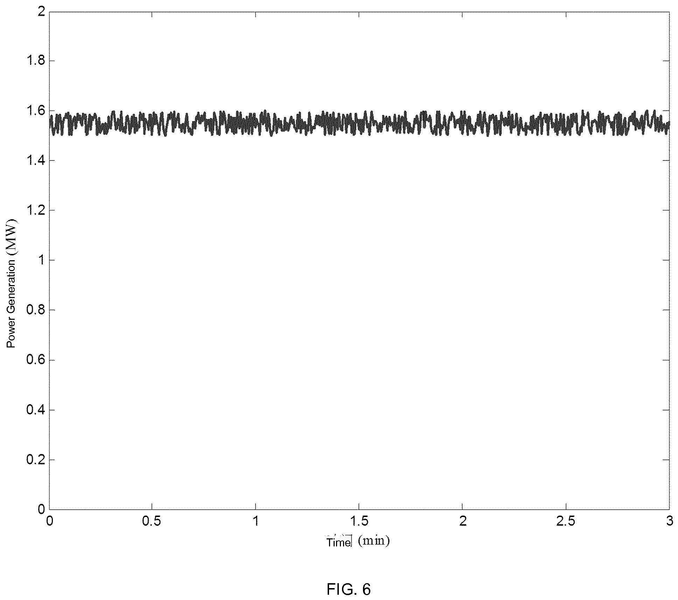

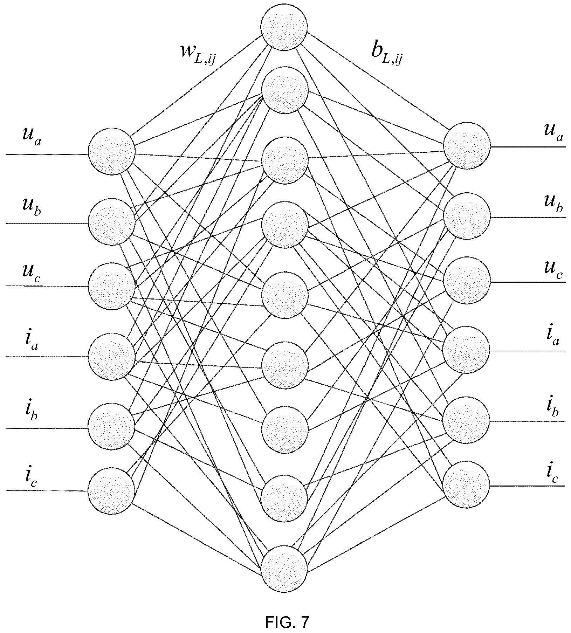

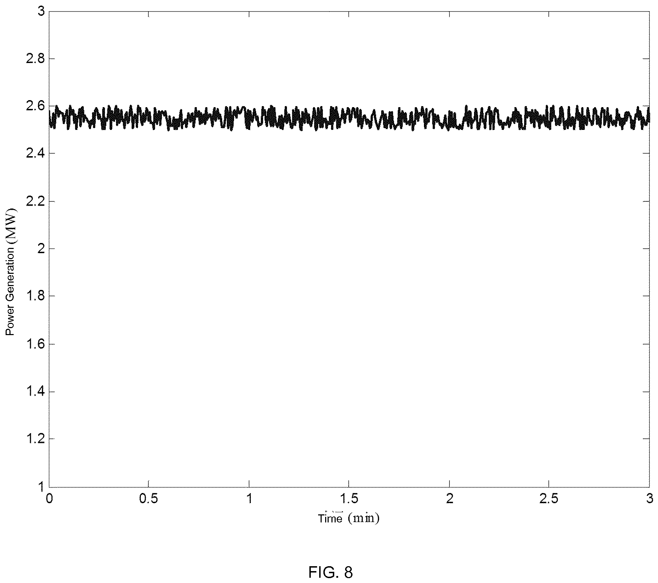

In the embodiment, for convenience of calculation, build a neural network model with the measured voltage value and current value at the join node of the energy internet and the distribution grid as input and the predicted voltage value and current value at the join node of the energy internet and the distribution grid as output, as shown in Figure 5 and Figure 7, to predict power generation and load of the energy internet, and obtain the predicted values for gross power generation and gross load in the energy internet within next three minutes, respectively as shown in Figure 6 and Figure 8, jittering around 1.5 MW and 2.5 MW.

Step 3: Judging whether the predicted value for the gross power generation is equal to that for the gross load in the energy internet; if yes, it indicates energy balance in the energy internet, then executing Step 7; if no, it indicates no energy balance in the energy internet, then executing Step 4.

From the above step, we can see that the predicted value $W_G$ for the gross power generation is not equal to the predicted value $W_L$ for the gross load in the embodiment, i.e., energy is unbalanced in the energy internet in the embodiment, then execute Step 4.

Step 4: Judging whether the predicted value for the gross power generation is less than that for the gross load in the energy internet; if yes, the electricity in the energy internet is insufficient, then executing Step 5; if no, the electricity in the energy internet is surplus, then executing Step 6.

The result of Step 2 shows that in the embodiment, $W_G < W_L$, i.e., in the embodiment, the electricity in the energy internet is insufficient, then execute Step 5.

Step 5: Supplying electric energy to the energy internet until energy balance is achieved in the energy internet, and then executing Step 7.

Step 5.1: Calculating the initial insufficient electricity in the energy internet, i.e., the difference $W_E = W_L - W_G$ between the predicted value $W_L$ for gross load of the local load and the predicted value $W_G$ for gross power generation of the distributed generation in the energy internet, and sending a control signal to each distributed energy storage device in the energy internet to start the distributed energy storage device to supply electric energy to the energy internet; assuming the supplied electricity to be $W_{Storage}$.

In the embodiment, the initial insufficient electricity is $W_E = 2.5MW - 1.5MW = 1MW$, and the electricity that can be supplied by the distributed energy storage device is $W_{Storage} = 0.6MW$.

Step 5.2: Judging whether the electric energy in the energy internet is still insufficient after the distributed energy storage device completes supply of electric energy, i.e., whether $W_{StorageE} > 0$, and $W_{StorageE} = W_E - W_{Storage}$; if yes, sending a control signal to the distribution grid to make it supply electric energy to the energy internet, and assuming the supplied electricity to be $W_{Grid-Storage}$; if no, executing Step 7.

Seen from Step 5.1, in the embodiment, after the distributed energy storage device completes supply of electric energy, the electric energy in the energy internet is still insufficient for $W_{StorageE} = 1MW - 0.6MW = 0.4MW$, and the electricity which can be supplied by the distribution grid is 0.2 MW.

Step 5.3: Judging whether the electric energy in the energy internet is still insufficient after the supply of electric energy to the distribution grid is completed, i.e., whether $W_{Grid-StorageE} > 0$, wherein $W_{Grid-StorageE} = W_{StorageE} - W_{Grid-Storage}$; if yes, sending a control signal to the flywheel power regulator to make it supply electric energy to the energy internet, and executing Step 7 when the supply electricity is $W_{Grid-StorageE}$; if no, executing Step 7.

Seen from Step 5.2, in the embodiment, after supply of electric energy to the distribution grid is completed, the electric energy in the energy internet is still insufficient for $W_{Grid-StorageE}$ = 0.4$MW$ - 0.2$MW$ = 0.2$MW$, then execute Step 7 after the energy internet with the flywheel power regulator as the embodiment continues supply of electric energy for 0.2$MW$.

Step 6: Allocating the surplus electric energy in the energy internet until energy balance is achieved in the energy internet, and then executing Step 7.

Step 6.1: Calculating the initial surplus electricity in the energy internet, i.e., the difference $W_S = W_G - W_L$ between $W_G$ and $W_L$.

Step 6.2: Sending a query signal to the distribution grid, and judging whether the distribution grid needs supply of electric energy through the response signal of the distribution grid; if yes, making the energy internet supply electric energy to the distribution grid, and then executing Step 6.3; if no, executing Step 6.4.

Step 6.3: Judging whether the electric energy is still surplus after supply of electric energy to the distribution grid is completed, i.e., whether $W_{SG}$ > 0, wherein $W_{SG} = W_S - W_{Grid}$, and $W_{Grid}$ is the electricity supplied to the distribution grid; if yes, executing Step 6.4; if no, executing Step 7.

Step 6.4: Calculating the State Of Charge $SOC$ of the distributed energy storage device in the energy internet; if $SOC$ = 1, the distributed energy storage device is in full energy, then executing Step 6.6; otherwise, supplying power to the distributed energy storage device, assuming the supplied electricity to be $W_{SStorage}$, and executing Step 6.5;.

wherein $$SOC = \frac{\text{Current Electricity}}{\text{Rated Capacity}},$$ $0 \le SOC \le 1$; when $SOC$ = 1, the distributed energy storage device is in full energy.

Step 6.5: Judging whether the electric energy is still surplus in the energy network after supply of electric energy to the distributed energy storage device is completed, i.e., whether $W_{SS}$ > 0, wherein if Step 6.3 is not executed, then $W_{SS} = W_S - W_{SStorage}$ ; if Step 6.3 is executed, then $W_{SS} = W_{SG} - W_{SStorage}$; if yes, executing Step 6.6; if no, executing Step 7.

Step 6.6: Making the flywheel power regulator consume excess electric energy in the energy internet until energy balance is achieved in the energy internet, and then executing Step 7.

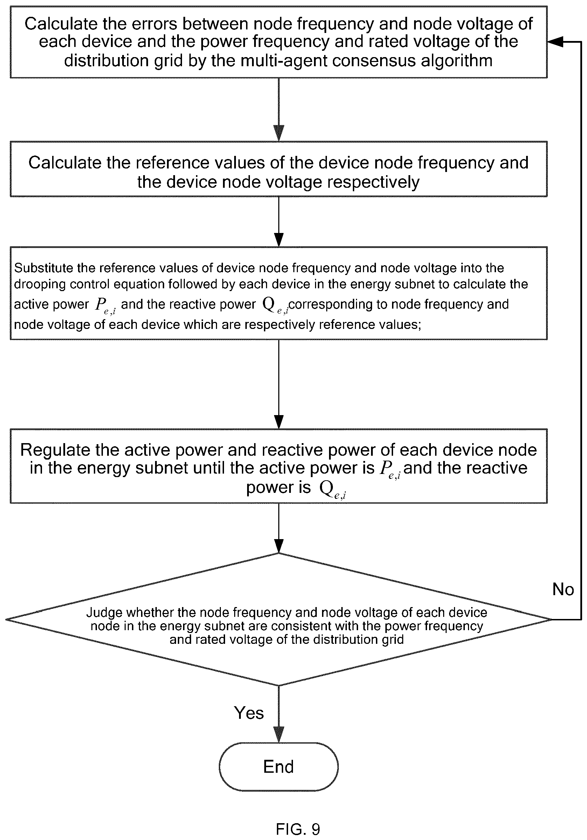

Step 7: Regulating the node frequency and node voltage of the distributed generation and local load in the corresponding energy subnet to keep each node frequency consistent with the power frequency of the distribution grid and each node voltage consistent with the rated voltage of the distribution grid; as shown in Figure 9, the following steps are included:

In the embodiment, collect the node frequency $f_i$ and node voltage $V_i$ of part of distributed generations and local loads in the 1# energy subnet (as shown in Figure 1) controlled by the 1# Type II energy switch, and the node rated active power $P_0$ and node rated reactive power $Q_0$ of part of distributed generations, distributed energy storage devices and local loads, as shown in Table 1:

Table 1 Examples of Node Parameters of Devices in 1# Energy Subnet Controlled by 1# Type II Energy Switch in the Embodiment

| Type of Device | Frequency (Hz) | Voltage (V) | Rated Power (Kw) | |
|---|---|---|---|---|
| | | | Active Power (Kw) | Reactive Power (Kw) |
| 1# Distributed Generation | 49.7 | 216 | 7.6 | 33.5 |
| 2# Distributed Generation | 49.9 | 218 | 10.3 | 31.5 |
| 1# Distributed Energy Storage Device | - | - | 7.1 | 45 |
| 2# Distributed Energy Storage Device | - | - | 11.3 | 49.2 |
| 1# Local Load | 50.4 | 221 | 5 | 22.3 |
| 2# Local Load | 48.6 | 213 | 6.3 | 27.5 |

In the embodiment, $f_0$ = 50$Hz$ is the frequency reference value provided by the 1# Type II energy switch, i.e., the power frequency of the distribution grid; $V_0$ = 220$V$ is the voltage reference value provided by the 1# Type II energy switch, i.e., the rated voltage of the distribution grid.

Step 7.1: Calculating the errors $e_{f,i}$, $e_{v,i}$ between the node frequency and node voltage of each device in the energy subnet and the power frequency and rated voltage of the distribution grid by the multi-agent consensus algorithm, as shown in the following formulas:

$$e_{f,i}(t) = \sum_{j=1}^{n} a_{ij} \left[ f_i(t) - f_j(t) \right] + \left[ f_i(t) - f_0(t) \right]$$

$$e_{v,i}(t) = \sum_{j=1}^{n} a_{ij} \left[ V_i(t) - V_j(t) \right] + \left[ V_i(t) - V_0(t) \right] \tag{1}$$

wherein the device comprises distributed generations and local loads in the energy subnet; $f_i(t)$ and $f_j(t)$ are respectively the frequency of the device node $i$ and the frequency of the device node $j$; $V_i$ and $V_j(t)$ are respectively the voltage of the device node $i$ and the voltage of the device node $j$; $a_{ij}$ represents the connection weight between the device node $i$ and the device node $j$; if there is a connection path between the device node $i$ and the device node $j$, then $a_{ij} = 1$; otherwise, $a_{ij} = 0$ $f_0$ is the frequency reference value provided by the energy switch, i.e., the power frequency of the distribution grid; $V_0$ is the voltage reference value provided by the energy switch, i.e., the rated voltage of the distribution grid.

Step 7.2: Respectively calculating the reference values of the device node frequency and the device node voltage using the error value $e_{f,i}$ of the node frequency and the error value $e_{v,i}$ of the node voltage, which are obtained in Step 7.1, as shown in the following formulas:

$$D_i(P)\dot{\theta}_i = P_0 - \sum_{j=1}^{n} V_i V_j \left| Y_{ij} \right| \sin\left( f_i - f_j \right) + u_{f,i}(t)$$

$$\tau_i \dot{E}_i = -\tilde{C}_i \left( V_i - V_i^* \right) + \sum_{j=1}^{n} V_i V_j \left| Y_{ij} \right| \cos\left( f_i - f_j \right) + u_{v,i}(t) \tag{2}$$

wherein $D_i = 1/n_i$, $\dot{\theta}_i = f_i - f_i^*$, $P_0$ is the active power of the device node at the power frequency of the distribution grid, $f_i^*$, $V_i^*$ are respectively the reference values of the device node frequency and device node voltage, $Y_{ij}$ is the admittance between the device node i and the device node j, $\tau_i > 0$, $\dot{E}_i = E_i - E_i^*$, and $\tilde{C}_i \overset{\Delta}{=} n_i^{-1}$; $u_{f,i}(t)$ = $e_{f,i}(t)$, and $u_{v,i}(t) = e_{v,i}(t)$.

Step 7.3: Substituting the reference value $f_i^*$ of node frequency and the reference value $V_i^*$ of node voltage, which are obtained in Step 7.2, into the drooping control equation followed by each device in the energy subnet to calculate the active power $P_{e,i}$ and the reactive power $Q_{e,i}$ when the node frequency and node voltage of each device are respectively reference values; the used drooping control equations are as follows:

$$f_i^* = f_0 - m_i \left( P_{e,i} - P_0 \right)$$

$$V_i^* = V_0 - n_i \left( Q_{e,i} - Q_0 \right) \tag{3}$$

wherein $Q_0$ is the reactive power of each device node in the energy subnet at the rated voltage of the distribution grid, and $m_i, n_i$ are respectively the drooping characteristic coefficients of active-frequency and reactive-voltage.

Step 7.4: Regulating the active power and reactive power of each device node in the energy subnet until the active power is $P_{e,i}$ and the reactive power is $Q_{e,i}$.

Step 7.5: Judging whether the node frequency and node voltage of each device node in the energy subnet are consistent with the power frequency and rated voltage of the distribution grid; if no, repeating Step 7.1 to 7.5 until the node frequency and node voltage of each device node in the energy subnet are consistent with the power frequency and rated voltage of the distribution grid.

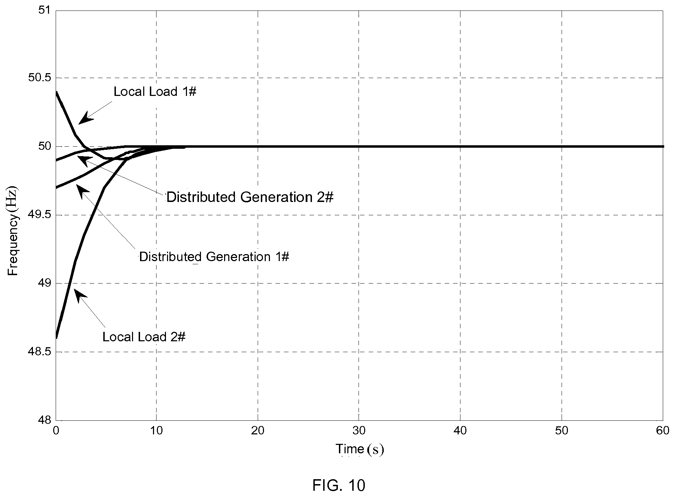

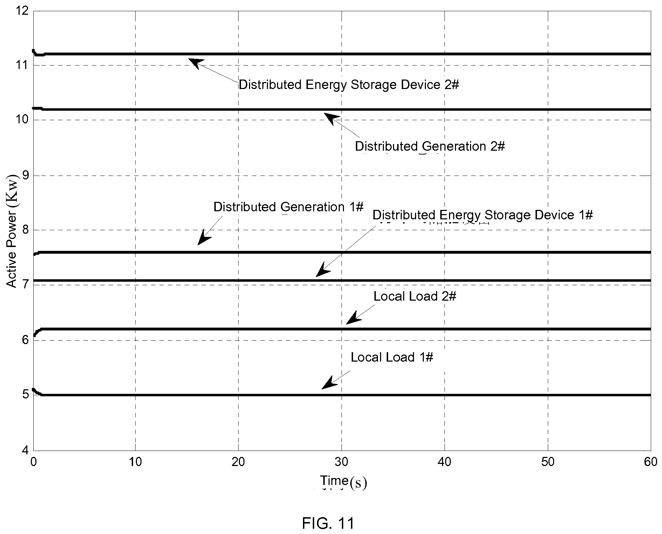

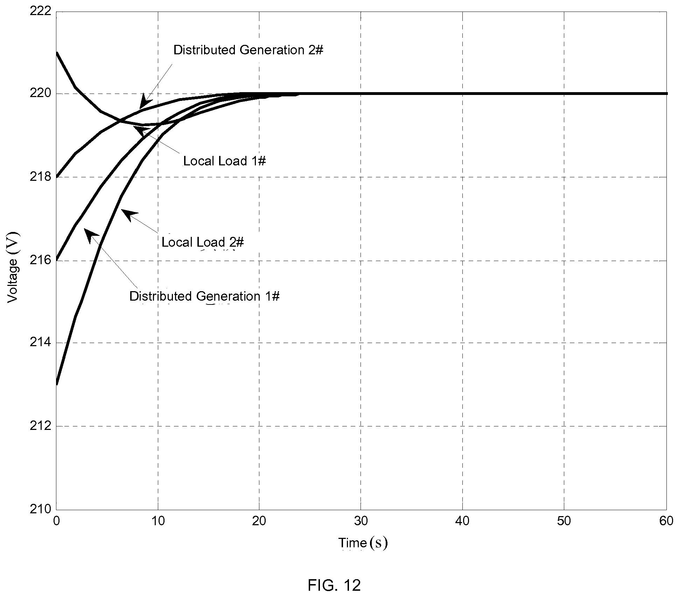

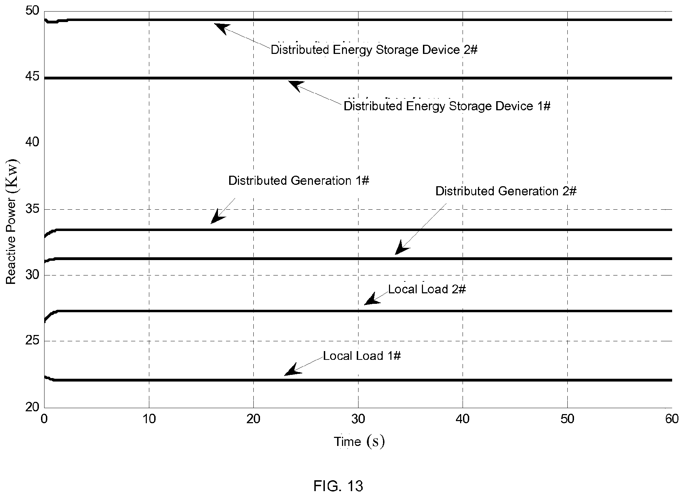

In the embodiment, the frequency voltage regulation method is performed on the 1# energy subnet controlled by the 1# Type II energy switch in the energy internet; the changes of each node frequency, active power, voltage and reactive power are shown in Figure 10, Figure 11, Figure 12 and Figure 13; after the devices in the 1# energy subnet operate for 14 s, each node frequency is consistent with the power frequency of the distribution grid; after these devices operate for 24 s, each node voltage is consistent with the rated voltage of the distribution grid; at this time, all the devices in the 1# energy subnet operate at the rated power, and the 1# energy subnet can operate safely and stably.

**Claims**

1. A control method using a hierarchical control system of an energy internet,
   wherein the hierarchical control system comprises
   a data collection module (S54), which is used for collecting node frequency, node voltage, node current, active power and reactive power of each distributed generation (S38-S39) and local load (S44-S45) in the energy internet, and the active power and reactive power of each distributed energy storage device (S40-S42);
   an energy prediction unit (S55), which is used for predicting gross power generation and gross load in the energy internet;
   an energy balance judgment module (S58), which is used for judging energy balance in the energy internet in accordance with the predicted values for power generation and load; when energy balance is not achieved in the energy internet, a corresponding control instruction is sent to an energy surplus-deficit judgment module (S62); when energy balance is achieved in the energy internet, a corresponding control instruction is sent to a frequency voltage regulation module (S59);
   an energy surplus-deficit judgment module (S60), which is used for accepting the control instruction sent by the energy balance judgment module (S58) to judge whether the electricity in the energy internet is surplus or insufficient and sending the judging result to an energy balance control unit;
   an energy balance control unit (S61), which is used for sending a control signal to the distributed energy storage device (S40-S42) or the distribution grid (S1) to make it supply electric energy to the energy internet when the electricity in the energy internet is insufficient, or sending an electric energy supply control signal to a power state regulation module (S64) after the distributed energy storage device (S40-S42) and the distribution grid (S1) complete supply of electric energy; or which is used for sending a control signal to the distributed generation (S38-S39) to make it supply power to the distribution grid (S1) or supply electric energy to the distributed energy storage device (S40-S42) when the electricity in the energy internet is surplus, or sending an electric energy consumption control signal to the power state regulation module (S64) when the distribution grid (S1) does not need supply of electric energy and the distributed energy storage device (S40-S42) is in full energy;
   a power state regulation module (S64), which is used for accepting the electric energy supply control signal or the electric energy consumption control signal, and sending a corresponding control signal to the flywheel power regulator (S47) to make it supply electric energy to the energy internet or consume excess electric energy in the energy internet;
   a frequency voltage regulation module (S59), which is used for accepting the control instruction from the energy balance judgment module (S58), and regulating the node frequency and node voltage of each corresponding distributed generation (S38-S39) and local load in the energy subnet to keep each node frequency consistent with the power frequency of the distribution grid (S1) and each node voltage consistent with the rated voltage of the distribution grid (S1),
   and wherein the control method comprises the following steps:

   Step 1: Collecting data comprising node frequency, node voltage, node current, active power and reactive power of each distributed generation (S38-S39) and local load in the energy internet, and active power and reactive power of each distributed energy storage device (S40-S42);
   Step 2: Predicting gross power generation and gross load in the energy internet by the neural network method according to the node current and node voltage of each distributed generation (S38-S39) and local load (S44-S45);
   Step 3: Judging whether the predicted value for the gross power generation is equal to that for the gross load in the energy internet; if yes, it indicates energy balance in the energy internet, then executing Step 7; if no, it indicates no energy balance in the energy internet, then executing Step 4;
   Step 4: Judging whether the predicted value for the gross power generation is less than that for the gross load in the energy internet; if yes, the electricity in the energy internet is insufficient, then executing Step 5; if no, the electricity in the energy internet is surplus, then executing Step 6;

Step 5: Supplying electric energy to the energy internet until energy balance is achieved in the energy internet, and then executing Step 7;

Step 6: Allocating the surplus electric energy in the energy internet until energy balance is achieved in the energy internet, and then executing Step 7;

Step 7: Regulating the node frequency and node voltage of the distributed generation (S38-S39) and local load (S44-S45) in the corresponding energy subnet to keep each node frequency consistent with the power frequency of the distribution grid (S1) and each node voltage consistent with the rated voltage of the distribution grid (S1), **characterized in that** Step 7 comprises the following steps:

Step 7.1: Calculating the errors $e_{f,i}$, $e_{v,i}$ between the node frequency and node voltage of each device in the energy subnet and the power frequency and rated voltage of the distribution grid (S1) by the multi-agent consensus algorithm, as shown in the following formulas:

$$e_{f,i}(t) = \sum_{j=1}^{n} a_{ij} \left[ f_i(t) - f_j(t) \right] + \left[ f_i(t) - f_0(t) \right]$$

$$e_{v,i}(t) = \sum_{j=1}^{n} a_{ij} \left[ V_i(t) - V_j(t) \right] + \left[ V_i(t) - V_0(t) \right] \qquad (1)$$

wherein the device comprises distributed generations (S38-S39) and local loads (S44-S45) in the energy subnet; $f_i(t)$ and $f_j(t)$ are respectively the frequency of the device node $i$ and the frequency of the device node $j$; $V_i(t)$ and $V_j(t)$ are respectively the voltage of the device node $i$ and the voltage of the device node $j$; $t$ represents the time; $a_{ij}$ represents the connection weight between the device node $i$ and the device node $j$; if there is a connection path between the device node $i$ and the device node $j$, then $a_{ij} = 1$; otherwise, $a_{ij} = 0$; $f_0$ is the frequency reference value provided by the energy switch, i.e., the power frequency of the distribution grid (S1); $V_0$ is the voltage reference value, provided by the energy switch, i.e., the rated voltage of the distribution grid (S1)

Step 7.2: Calculating the reference values of the node frequency and the node voltage using the error value $e_{f,i}$ of the node frequency and the error value $e_{v,i}$ of the node voltage, which are obtained in Step 7.1, as shown in the following formulas:

$$D_i(P)\dot{\theta}_i = P_0 - \sum_{j=1}^{n} V_i V_j |Y_{ij}| \sin(f_i - f_j) + u_{f,i}(t)$$

$$\tau_i \dot{E}_i = -\tilde{C}_i (V_i - V_i^*) + \sum_{j=1}^{n} V_i V_j |Y_{ij}| \cos(f_i - f_j) + u_{v,i}(t) \qquad (2)$$

wherein $u_{f,i}(t) = e_{f,i}(t)$, and $u_{v,i}(t) = e_{v,i}(t)$ $D_i = 1/n_i$, $\dot{\theta}_i = f_i - f_i^*$, $P_0$ is the active power of the device node at the power frequency of the distribution grid (S1), $f_i^*, V_i^*$ are respectively the reference values of the device node frequency and device node voltage, $Y_{ij}$ is the admittance between the device node $i$ and the device node $j$, $\tau_i > 0$, $\dot{E}_i = E_i - E_i^*$, and $\tilde{C}_i \overset{\Delta}{=} n_i^{-1}$.

Step 7.3: Substituting the reference value $\dot{f}_i^*$ of node frequency and the reference value $V_i^*$ of node voltage, which are obtained in Step 7.2, into the drooping control equation followed by each device in the energy subnet to calculate the active power $P_{e,i}$ and the reactive power $Q_{e,i}$ when the node frequency and node voltage of each device are respectively reference values; the used drooping control equations are as follows:

$$f_i^* = f_0 - m_i \left( P_{e,i} - P_0 \right)$$

$$V_i^* = V_0 - n_i \left( Q_{e,i} - Q_0 \right) \tag{3}$$

wherein $Q_0$ is the reactive power of each device node in the energy subnet at the rated voltage of the distribution grid (S1), and $m_i$, $n_i$ are respectively the drooping characteristic coefficients of active-frequency and reactive-voltage.

Step 7.4: Regulating the active power and reactive power of each device node in the energy subnet until the active power is $P_{e,i}$ and the reactive power is $Q_{e,i}$.

Step 7.5: Judging whether the node frequency and node voltage of each device node in the energy subnet are consistent with the power frequency and rated voltage of the distribution grid (S1); if no, repeating Step 7.1 to 7.5 until the node frequency and node voltage of each device node in the energy subnet are consistent with the power frequency and rated voltage of the distribution grid (S1).

2. A hierarchical control method of the energy internet according to Claim 1, wherein in Step 5, electric energy is supplied to the energy internet in the following specific steps:

Step 5.1: Calculating the initial insufficient electricity in the energy internet, i.e., the difference $W_E = W_L - W_G$ between the predicted value $W_L$ for gross load of the local load (S44-S45) and the predicted value $W_G$ for gross power generation of the distributed generation (S38-S39) in the energy internet, and sending a control signal to each distributed energy storage device (S40-S42) in the energy internet to start the distributed energy storage device (S40-S42) to supply electric energy to the energy internet; assuming the supplied electricity to be .

Step 5.2: Judging whether the electric energy in the energy internet is still insufficient after the distributed energy storage device (S40-S42) completes supply of electric energy, i.e., whether $W_{StorageE} > 0$, wherein $W_{StorageE}$ - $W_E$ - $W_{Storage}$; if yes, sending a control signal to the distribution grid (S1) to make it supply electric energy to the energy internet, and assuming the supplied electricity to be $W_{Grid\text{-}Storage}$ ; if no, executing Step 7.

Step 5.3: Judging whether the electric energy in the energy internet is still insufficient after the supply of electric energy to the distribution grid (S1) is completed, i.e., whether $W_{Grid\text{-}StorageE} > 0$, wherein $W_{Grid\text{-}StorageE} = W_{StorageE}$ - $W_{Grid\text{-}Storage}$; if yes, sending a control signal to the flywheel power regulator (S47) to make it supply electric energy to the energy internet, and executing Step 7 when the supplied electricity is $W_{Grid\text{-}StorageE}$; if no, executing Step 7.

3. A hierarchical control method of the energy internet according to any one of Claims 1 and 2, wherein in Step 6, surplus electric energy in the energy internet is allocated in the following specific steps:

Step 6.1: Calculating the initial surplus electricity in the energy internet, i.e., the difference $W_S = W_G - W_L$ between $W_G$ and $W_L$.

Step 6.2: Letting the distribution grid (S1) make a response for whether to need supply of electric energy; if yes, making the energy internet supply power to the distribution grid (S1), and then executing Step 6.3; if no, executing Step 6.4;

Step 6.3: Judging whether the electric energy is still surplus after supply of electric energy to the distribution grid (S1) is completed, i.e., whether $W_{SG} > 0$, wherein $W_{SG} = W_S - W_{Grid}$, and $W_{Grid}$ is the electricity supplied to the distribution grid (S1); if yes, executing Step 6.4; if no, executing Step 7.

Step 6.4: Calculating the State Of Charge **SOC** of the distributed energy storage device (S40-S42) in the energy internet; if $SOC = 1$, the distributed energy storage device (S40-S42) is in full energy, then executing Step 6.6; otherwise, supplying power to the distributed energy storage device (S40-S42), assuming the supplied electricity to be $W_{SStorage}$, and executing Step 6.5.

Step 6.5: Judging whether the electric energy is still surplus in the energy network after supply of electric energy to the distributed energy storage device (S40-S42) is completed, i.e., whether $W_{SS} > 0$, wherein if Step 6.3 is not executed, then $W_{SS} = W_S - W_{SStorage}$; if Step 6.3 is executed, then $W_{SS} = W_{SG} - W_{SStorage}$; if yes, executing Step 6.6; if no, executing Step 7.

Step 6.6: Making the flywheel power regulator (S47) consume excess electric energy in the energy internet until energy balance is achieved in the energy internet, and then executing Step 7.

4. A hierarchical control method of the energy internet according to any one of Claims 1 to 3 wherein the energy prediction unit further comprises:

   a power generation prediction module, which is used for predicting gross power generation in the energy internet by the neural network method according to the node voltage and node current of each distributed generation (S38-S39);
   a load prediction module (S57), which is used for predicting gross load in the energy internet by the neural network method according to the node voltage and node current of each local load (S44-S45);

5. A hierarchical control method of the energy internet according to any one of Claims 1 to 4 wherein the energy balance control unit further comprises:

   an insufficient electricity supply control module (62), which is used for sending a control signal to the distributed energy storage device (S40-S42) to start it to supply electric energy when the electricity in the energy internet is insufficient; if the electricity in the energy internet is still insufficient after the distributed energy storage device (S40-S42) completes supply of electric energy, the insufficient electricity supply control module (62) sends a control signal to the distribution grid (S1) to make it supply power to the energy internet; if the distribution grid (S1) cannot supply electric energy to the energy internet or the electricity in the energy internet is still insufficient after the distribution grid completes supply of electric energy, an electric energy supply control signal is sent to the power state regulation module (S64);
   a surplus electricity allocation control module (S63), which is used for sending a control signal to the distributed generation (S38-S39) to make it supply power to the distribution grid (S1) when the electricity in the energy internet is surplus; if the distribution grid (S1) does not need supply of electric energy or the electric energy is still surplus in the energy internet after supply of electric energy to the distribution grid (S1) is completed, the distributed energy storage device (S40-S42) makes a response for whether to need supply of power; if the distributed energy storage device (S40-S42) needs supply of power, it is started to be supplied; if the distributed energy storage device (S40-S42) does not need supply of power or the electric energy is still surplus in the energy internet after supply of electric energy to the distributed energy storage device (S40-S42) is completed, an electric energy consumption control signal is sent to the power state regulation module (S64).

6. A hierarchical control method according to any one of Claims 1 to 5 wherein said energy internet comprises an energy router module (S8), an energy switch module (S12) and an energy subnet module (S18), the energy router module (S8) comprising at least one energy router (S9-S11); the energy switch module (S12) comprises at least one energy switch (S13-S17); the energy subnet module (S18) comprises at least one energy subnet (S19-S29); all energy routers (S9-S11), energy switches (S13-S17) and energy subnets (S19-S29) are independent of each other; the input end of the energy router (S9-S11) is connected to a distribution grid (S1), and the output end of the energy router (S9-S11) is connected with one input end of the energy switch (S13-S17) or simultaneously connected with the input ends of a plurality of energy switches (S13-S17); the output end of the energy switch (S13-S17) is connected with an energy subnet (S19-S29) or simultaneously connected with a plurality of energy subnets (S19-S29);
   the energy subnet comprising at least one distributed generation (S38-S39), at least one distributed energy storage device (S40-S42) and at least one local load (S44-S45); the distributed generation (S38-S39), the distributed energy storage device (S40-S42) and the local load (S44-S45) being connected with the output end of the energy switch (S13-S17) corresponding to the energy subnet (S19-S29) which the distributed generation (S38-S39), the distributed energy storage device (S40-S42) and the local load (S44-S45) belong to.
   the energy router (S9-S11) further comprising a first processor (S48) and a flywheel power regulator (S47), wherein the first processor (S48) is used for collecting node voltage and node current of each distributed generation (S38-S39) in the energy internet, node voltage and node current of each local load (S44-S45), and active power and reactive power of each distributed energy storage device (S40-S42), and predicting gross power generation and gross load in the energy internet by the neural network method; energy balance in the energy internet is judged in accordance with the predicted values for power generation and load; when energy balance is achieved in the energy internet, a frequency voltage regulation control instruction is sent to the corresponding energy switch; when energy balance is not achieved in the energy internet, whether the electricity of the energy internet is surplus or insufficient is judged; when the electricity of the energy internet is insufficient, a control signal is sent to the distributed energy storage device (S40-S42) to start it to supply electric energy to the energy internet; after the distributed energy storage device (S40-S42) completes supply of electric energy and if the electricity of the energy internet is still insufficient, a control signal is sent to the distribution grid to make it supply electric energy to the energy internet; if the distribution grid (S1) cannot supply electric energy to the energy internet or the electricity of the energy internet is still insufficient after the distribution grid (S1) completes supply of electric energy, the flywheel power regulator (S47) is started to supply electric energy to the energy internet; when the electricity of the energy internet is surplus, a control signal is sent to the distributed generation (S38-S39) to make it supply power to the distribution grid (S1); if the distribution grid (S1) does not need supply of electric energy or the electric energy is still surplus in the energy internet after supply of electric energy to the distribution grid (S1) is completed, the distributed energy storage device (S40-S42) makes a response for whether to need supply of power; if the distributed energy storage device (S40-S42) needs supply of power, it is started to be supplied; if the distributed energy storage device (S40-S42) does not need supply of power or the electric energy is still surplus in the energy internet after supply of electric energy to the distributed energy storage device (S40-S42) is completed, the flywheel power regulator (S47) is started to consume excess electric energy in the energy internet.

the energy switch further comprising a second processor which is used for collecting node frequency, voltage, active power and reactive power of each distributed generation (S38-S39) and local load in the energy subnet (S19-S29) connected with the energy switch (S13-S17), accepting the frequency voltage regulation control instruction to regulate the node frequency and node voltage of the distributed generation (S38-S39) and the local load (S44-S45) in the energy subnet (S19-S29) connected with the energy switch to keep each node frequency consistent with the power frequency of the distribution grid (S1) and each node voltage consistent with the rated voltage of the distribution grid (S1).

7. A hierarchical control method according to Claims 6 wherein the distributed generation (S38-S39), the distributed energy storage device (S40-S42) and the local load (S44-S45) are connected with the output end of the energy switch (S13-S17) corresponding to the energy subnet (S19-S29), to which the distributed generation (S38-S39), the distributed energy storage device (S40-S42) and the local load (S44-S45) belong, through hot plug interfaces (S31-S36).

8. A hierarchical control method according to any one of Claims 6 and 7 wherein the energy switch (S13-S17) is further classified into:

   Type I energy switch (S14, S16) used for controlling energy subnets with different kinds of power consumptions;
   Type II energy switch (S15, S17) used for controlling energy subnets with the same kind of power consumption.

**Patentansprüche**

1. Steuerungsverfahren mithilfe eines hierarchischen Steuersystems eines Energie-Internets,
   wobei das hierarchische Steuersystem umfasst:

   ein Datenerfassungsmodul (S54), das dazu dient, Knotenfrequenz, Knotenspannung, Knotenstrom, Wirkleistung und Blindleistung jeder verteilten Erzeugung (S38-S39) und lokalen Last (S44-S45) im Energie-Internet und die Wirkleistung und Blindleistung jeder verteilten Energiespeichervorrichtung (S40-S42) zu erfassen; eine Energievorhersageeinheit (S55), die dazu dient, die Bruttoleistungserzeugung und Bruttolast im Energie-Internet vorherzusagen;
   ein Energiegleichgewicht-Beurteilungsmodul (S58), das dazu dient, das Energiegleichgewicht im Energie-Internet gemäß den vorhergesagten Werten für die Leistungserzeugung und Last zu beurteilen; wenn das Energiegleichgewicht im Energie-Internet nicht erreicht wird, wird eine entsprechende Steueranweisung an ein Energieüberschuss-/-defizit-Beurteilungsmodul (S62) gesendet; wenn das Energiegleichgewicht im Energie-Internet erreicht wird, wird eine entsprechende Steueranweisung an ein Frequenz-/Spannungsregelmodul (S59) gesendet;
   ein Energieüberschuss-/-defizit-Beurteilungsmodul (S60), das dazu dient, die vom Energiegleichgewicht-Beurteilungsmodul (S58) gesendete Steueranweisung anzunehmen, um zu beurteilen, ob die Elektrizität im Energie-Internet im Überschuss vorhanden ist oder mangelt, und das Beurteilungsergebnis an eine Energiegleichgewicht-Steuereinheit zu senden;
   eine Energiegleichgewicht-Steuereinheit (S61), die dazu dient, ein Steuersignal an die verteilte Energiespeichervorrichtung (S40-S42) oder das Verteilernetz (S1) zu senden, um sie/es zu veranlassen, Elektroenergie in das Energie-Internet einzuspeisen, wenn die Elektrizität im Energie-Internet mangelt, oder nach Abschluss der Elektroenergieeinspeisung durch die verteilte Energiespeichervorrichtung (S40-S42) und das Verteilernetz (S1) ein Steuersignal für Elektroenergieeinspeisung an ein Leistungsstandregelmodul (S64) zu senden; oder die dazu dient, ein Steuersignal an die verteilte Erzeugung (S38-S39) zu senden, um sie zu veranlassen, Leistung in das Verteilernetz (S1) einzuspeisen oder Elektroenergie in die verteilte Energiespeichervorrichtung (S40-S42) einzuspeisen, wenn die Elektrizität im Energie-Internet im Überschuss vorhanden ist, oder ein Steuersignal für Elektroenergieverbrauch an das Leistungsstandregelmodul (S64) zu senden, wenn das Verteilernetz (S1) keine Elektroenergieeinspeisung benötigt und die verteilte Energiespeichervorrichtung (S40-S42) die volle Energie aufweist;

ein Leistungsstandregelmodul (S64), das dazu dient, das Steuersignal für Elektroenergieeinspeisung oder das Steuersignal für Elektroenergieverbrauch anzunehmen und ein entsprechendes Steuersignal an den Schwungrad-Leistungsregler (S47) zu senden, um ihn zu veranlassen, Elektroenergie in das Energie-Internet einzuspeisen oder überschüssige Elektroenergie im Energie-Internet zu verbrauchen;

ein Frequenz-/Spannungsregelmodul (S59), das dazu dient, die Steueranweisung vom Energiegleichgewicht-Beurteilungsmodul (S58) anzunehmen und die Knotenfrequenz und Knotenspannung jeder entsprechenden verteilten Erzeugung (S38-S39) und lokalen Last im Energieteilnetz zu regeln, um jede Knotenfrequenz im Einklang mit der Leistungsfrequenz des Verteilernetzes (S1) und jede Knotenspannung im Einklang mit der Nennspannung des Verteilernetzes (S1) zu halten, und wobei das Steuerungsverfahren die folgenden Schritte umfasst:

Schritt 1: Erfassung von Daten, umfassend Knotenfrequenz, Knotenspannung, Knotenstrom, Wirkleistung und Blindleistung jeder verteilten Erzeugung (S38-S39) und lokalen Last im Energie-Internet und Wirkleistung und Blindleistung jeder verteilten Energiespeichervorrichtung (S40-S42);

Schritt 2: Vorhersagen der Bruttoleistungserzeugung und der Bruttolast im Energie-Internet durch ein Neuronales-Netz-Verfahren gemäß dem Knotenstrom und der Knotenspannung jeder verteilten Erzeugung (S38-S39) und der lokalen Last (S44-S45);

Schritt 3: Beurteilen, ob der vorhergesagte Wert für die Bruttoleistungserzeugung gleich demjenigen für die Bruttolast im Energie-Internet ist; wenn ja, gibt es das Energiegleichgewicht im Energie-Internet an, dann Ausführung von Schritt 7; wenn nein, gibt es kein Energiegleichgewicht im Energie-Internet an, dann Ausführen von Schritt 4;

Schritt 4: Beurteilen, ob der vorhergesagte Wert für die Bruttoleistungserzeugung niedriger ist als derjenige für die Bruttolast im Energie-Internet; wenn ja, mangelt die Elektrizität im Energie-Internet, dann Ausführen von Schritt 5; wenn nein, ist die Elektrizität im Energie-Internet im Überschuss vorhanden, dann Ausführen von Schritt 6;

Schritt 5: Einspeisen von Elektroenergie in das Energie-Internet, bis das Energiegleichgewicht im Energie-Internet erreicht ist, und dann Ausführen von Schritt 7;

Schritt 6: Zuweisen der überschüssigen Elektroenergie im Energie-Internet, bis das Energiegleichgewicht im Energie-Internet erreicht ist, und dann Ausführen von Schritt 7;

Schritt 7: Regeln der Knotenfrequenz und der Knotenspannung der verteilten Erzeugung (S38-S39) und der lokalen Last (S44-S45) im entsprechenden Energieteilnetz, um jede Knotenfrequenz im Einklang mit der Leistungsfrequenz des Verteilernetzes (S1) und jede Knotenspannung im Einklang mit der Nennspannung des Verteilernetzes (S1) zu halten, **dadurch gekennzeichnet, dass** Schritt 7 die folgenden Schritte umfasst:

Schritt 7.1: Berechnen der Fehlbeträge $e_{f,i}$, $e_{v,i}$ zwischen der Knotenfrequenz und der Knotenspannung jeder Vorrichtung im Energieteilnetz und der Leistungsfrequenz und der Nennspannung des Verteilernetzes (S1) durch einen Multiagenten-Konsensalgorithmus, wie in den folgenden Formeln dargestellt:

$$e_{f,i}(t) = \sum_{j=1}^{n} a_{ij}\left[f_i(t) - f_j(t)\right] + \left[f_i(t) - f_0(t)\right]$$

$$(1)$$

$$e_{v,i}(t) = \sum_{j=1}^{n} a_{ij}\left[V_i(t) - V_j(t)\right] + \left[V_i(t) - V_0(t)\right]$$

wobei die Vorrichtung verteilte Erzeugungen (S38-S39) und lokale Lasten (S44-S45) im Energieteilnetz umfasst; $f_i(t)$ und $f_j(t)$ jeweils die Frequenz des Vorrichtungsknotens $i$ und die Frequenz des Vorrichtungsknotens $j$ sind; $V_i(t)$ und $V_j(t)$ jeweils die Spannung des Vorrichtungsknotens $i$ und die Spannung des Vorrichtungsknotens $j$ sind; $t$ die Zeit darstellt; $a_{ij}$ das Verbindungsgewicht zwischen dem Vorrichtungsknoten $i$ und dem Vorrichtungsknoten $j$ darstellt; wenn es einen Verbindungsweg zwischen dem Vorrichtungsknoten $i$ und dem Vorrichtungsknoten $j$ gibt, dann $a_{ij}$ = 1, andernfalls $a_{ij}$ = 0; $f_0$ der Frequenzreferenzwert ist, der vom Energieschalter bereitgestellt wird, d. h. die Leistungsfrequenz des Verteilernetzes (S1); $V_0$ der Spannungsreferenzwert ist, der vom Energieschalter bereitgestellt wird, d. h. die Nennspannung des Verteilernetzes (S1). Schritt 7.2: Berechnen der Referenzwerte der Knotenfrequenz und der Knotenspannung mithilfe des Fehlbetragswerts $e_{f,i}$ der Knotenfrequenz und des Fehlbetragswerts $e_{v,i}$ der Knotenspannung, die in Schritt 7.1 gewonnen werden, wie in den folgenden Formeln dargestellt:

$$D_i(P)\dot{\theta}_i = P_0 - \sum_{j=1}^{n} V_i V_j \left| Y_{ij} \right| \sin(f_i - f_j) + u_{f,i}(t)$$

$$(2)$$

$$\tau_i \dot{E}_i = -\tilde{C}_i(V_i - V_i^*) + \sum_{j=1}^{n} V_i V_j \left| Y_{ij} \right| \cos(f_i - f_j) + u_{v,i}(t)$$

wobei $u_{f,i}(t) = e_{f,i}(t)$ und $u_{v,i}(t) = e_{v,i}(t)$, $D_i$ = $1/n_i$, $\dot{\theta}_i = f_i - f_i^*$, $P_0$ die Wirkleistung des Vorrichtungsknotens mit der Leistungsfrequenz des Verteilernetzes (S1) ist, $f_i^*$ bzw. $V_i^*$ die Referenzwerte der Frequenz des Vorrichtungsknotens und der Spannung des Vorrichtungsknotens sind, $Y_{ij}$ der Scheinleitwert zwischen dem Vorrichtungsknoten $i$ und dem Vorrichtungsknoten $j$ ist, $\tau_i > 0$, $\dot{E}_i = E_i - E_i^*$ und

$$-\tilde{C}_i \triangleq n_i^{-1}.$$

Schritt 7.3: Einsetzen des Referenzwerts $f_i^*$ der Knotenfrequenz und des Referenzwerts $V_i^*$ der Knotenspannung, die in Schritt 7.2 gewonnen werden, in die Gleichung der Abweichungsregelung, der von jeder Vorrichtung im Energieteilnetz gefolgt wird, zur Berechnung der Wirkleistung $P_{e,i}$ und der Blindleistung $Q_{e,i}$, wenn die Knotenfrequenz und die Knotenspannung jeder Vorrichtung jeweils Referenzwerte sind; die verwendeten Abweichungsregelungsgleichungen lauten wie folgt:

$$f_i^* = f_0 - m_i(P_{e,i} - P_0)$$

$$V_i^* = V_0 - n_i(Q_{e,i} - Q_0)$$

wobei $Q_0$ die Blindleistung jedes Vorrichtungsknotens im Energieteilnetz mit der Nennspannung des Verteilernetzes (S1) ist und $m_i, n_i$ jeweils die Kennkoeffizienten der Wirkleistungsfrequenz und der Blindleistungsspannung sind.

Schritt 7.4: Regeln der Wirkleistung und der Blindleistung jedes Vorrichtungsknotens im Energieteilnetz, bis die Wirkleistung $P_{e,i}$ ist und die Blindleistung $Q_{e,i}$ ist.

Schritt 7.5: Beurteilen, ob die Knotenfrequenz und die Knotenspannung jedes Vorrichtungsknotens im Energieteilnetz mit der Leistungsfrequenz und der Nennspannung des Verteilernetzes (S1) im Einklang stehen; wenn nein, Wiederholen von Schritt 7.1 bis 7.5, bis die Knotenfrequenz und die Knotenspannung jedes Vorrichtungsknotens im Energieteilnetz mit der Leistungsfrequenz und der Nennspannung des Verteilernetzes (S1) im Einklang steht.

2. Hierarchisches Steuerungsverfahren des Energie-Internets nach Anspruch 1, wobei in Schritt 5 Elektroenergie in den folgenden bestimmten Schritten in das Energie-Internet eingespeist wird:

Schritt 5.1: Berechnen der anfänglich mangelnden Elektrizität im Energie-Internet, d. h. der Differenz zwischen $W_E = W_L - W_G$ zwischen dem vorhergesagten Wert $W_L$ für die Bruttolast der lokalen Last (S44-S45) und dem vorhergesagten Wert für die Bruttoleistungserzeugung $W_G$ der verteilten Erzeugung (S38-S39) im Energie-Internet und Senden eines Steuersignals an jede verteile Energiespeichervorrichtung (S40-S42) im Energie-Internet, um die Einspeisung von Elektroenergie in das Energie-Internet durch die verteilte Energiespeichervorrichtung (S40-S42) zu starten; unter der Annahme, dass die eingespeiste Energie [...] ist.

Schritt 5.2: Beurteilen, ob die Elektroenergie im Energie-Internet nach Abschluss der Elektroenergieeinspeisung durch die verteilte Energiespeichervorrichtung (S40-S42) immer noch mangelt, d. h. ob $W_{speicherE} > 0$, wobei $W_{speicherE} = W_E - W_{speicher}$; wenn ja, Senden eines Steuersignals an das Verteilernetz (S1), um es zu veranlassen, Elektroenergie in das Energie-Internet einzuspeisen, und unter der Annahme, dass die eingespeiste Elektrizität $W_{Netz-Speicher}$ ist; wenn nein, Ausführen von Schritt 7.

Schritt 5.3: Beurteilen, ob die Elektroenergie im Energie-Internet nach Abschluss der Elektroenergieeinspeisung in das Verteilernetz (S1) immer noch mangelt, d. h. ob $W_{Netz-SpeicherE} > 0$, wobei $W_{Netz-SpeicherE} = W_{SpeicherE} - W_{Netz-Speicher}$; wenn ja, Senden eines Steuersignals an den Schwungrad-Leistungsregler (S47), um ihn zu veranlassen, Elektroenergie in das Energie-Internet einzuspeisen, und Ausführen von Schritt 7, wenn die eingespeiste Elektrizität $W_{Netz-SpeicherE}$ ist; wenn nein, Ausführen von Schritt 7.

3. Hierarchisches Steuerungsverfahren des Energie-Internets nach einem der Ansprüche 1 und 2, wobei in Schritt 6 überschüssige Elektroenergie im Energie-Internet in den folgenden bestimmten Schritten zugewiesen wird:

Schritt 6.1: Berechnen der überschüssigen Elektrizität im Energie-Internet, d. h. der Differenz $W_S = W_G - W_L$ zwischen $W_G$ und $W_L$.

Schritt 6.2: Veranlassen einer Antwort des Verteilernetzes (S1), ob eine Elektroenergieeinspeisung notwendig ist; wenn ja, Veranlassen des Energie-Internets, Leistung in das Verteilernetz (S1) einzuspeisen, und dann Ausführen von Schritt 6.3; wenn nein, Ausführen von Schritt 6.4;

Schritt 6.3: Beurteilen, ob die Elektroenergie nach Abschluss der Elektroenergieeinspeisung in das Verteilernetz (S1) immer noch im Überschuss vorhanden ist, d. h. ob $W_{SG} > 0$ , wobei $W_{SG} = W_S - W_{Netz}$ und $W_{Netz}$ die in das Verteilernetz (S1) eingespeiste Elektrizität ist; wenn ja, Ausführen von Schritt 6.4; wenn nein, Ausführen von Schritt 7.

Schritt 6.4: Berechnen des Ladezustands (State of Charge - SOC) der verteilten Energiespeichervorrichtung (S40-S42) im Energie-Internet; wenn SOC=1, weist die verteilte Energiespeichervorrichtung (S40-S42) die volle Energie auf, dann Ausführen von Schritt 6.6; andernfalls Einspeisen von Leistung in die verteilte Energiespeichervorrichtung (S40-S42) unter der Annahme, dass die eingespeiste Elektrizität $W_{SSpeicher}$ ist, und Ausführen von Schritt 6.5.

Schritt 6.5: Beurteilen, ob die Elektroenergie nach der Elektroenergieeinspeisung in die verteilte Energiespeichervorrichtung (S40-S42) im Energienetz immer noch im Überschuss vorhanden ist, d. h. ob $W_{SS} > 0$, wobei, wenn Schritt 6.3 nicht ausgeführt wird, $W_{SS} = W_S - W_{SSpeicher}$; wenn Schritt 6.3 ausgeführt wird, $W_{SS} = W_{SG} - W_{SSpeicher}$ gilt; wenn ja, Ausführen von Schritt 6.6; wenn nein; Ausführen von Schritt 7.

Schritt 6.6: Veranlassen, dass der Schwungrad-Leistungsregler (S47) überschüssige Elektroenergie im Energie-Internet verbraucht, bis das Energiegleichgewicht im Energie-Internet erreicht ist, und dann Ausführen von Schritt 7.

4. Hierarchisches Steuerungsverfahren des Energie-Internets nach einem der Ansprüche 1 bis 3, wobei die Energievorhersageeinheit ferner umfasst:

ein Leistungserzeugungsvorhersagemodul, das dazu dient, die Bruttoleistungserzeugung im Energie-Internet durch das Neuronales-Netz-Verfahren nach der Knotenspannung und dem Knotenstrom jeder verteilten Erzeugung (S38-S39) vorherzusagen;

ein Lastvorhersagemodul (S57), das dazu dient, die Bruttolast im Energie-Internet durch das Neuronales-Netz-Verfahren nach der Knotenspannung und dem Knotenstrom jeder lokalen Last (S44-S45) vorherzusagen.

5. Hierarchisches Steuerungsverfahren des Energie-Internets nach einem der Ansprüche 1 bis 4, wobei die Energiegleichgewicht-Steuereinheit ferner umfasst:

ein Mangel-Elektrizitätseinspeisungssteuermodul (62), das dazu dient, ein Steuersignal an die verteilte Energiespeichervorrichtung (S40-S42) zu senden, damit sie mit dem Einspeisen von Elektroenergie beginnt, wenn die Elektrizität im Energie-Internet mangelt; wenn die Elektrizität im Energie-Internet nach Abschluss der Elektroenergieeinspeisung durch die verteilte Energiespeichervorrichtung (S40-S42) immer noch mangelt, sendet das Mangel-Elektrizitätseinspeisungssteuermodul (62) ein Steuersignal an das Verteilernetz (S1), um es zu veranlassen, Leistung in das Energie-Internet einzuspeisen; wenn das Verteilernetz (S1) keine Elektroenergie in das Energie-Internet einspeisen kann oder die Elektrizität im Energie-Internet nach Abschluss der Elektroenergieeinspeisung durch das Verteilernetz immer noch mangelt, wird ein Steuersignal für Elektroenergieeinspeisung an das Leistungsstandregelmodul (S64) gesendet;

ein Steuermodul für die Zuweisung überschüssiger Elektrizität (S63), das dazu dient, ein Steuersignal an die verteilte Erzeugung (S38-S39) zu senden, um sie zu veranlassen, Leistung in das Verteilernetz (S1) einzuspeisen, wenn die Elektrizität im Energie-Internet im Überschuss vorhanden ist; wenn das Verteilernetz (S1) keine Elektroenergieeinspeisung benötigt oder die Elektroenergie nach Abschluss der Elektroenergieeinspeisung in das Verteilernetz (S1) im Energie-Internet immer noch im Überschuss vorhanden ist, liefert die verteilte Energiespeichervorrichtung (S40-S42) eine Antwort, ob eine Leistungseinspeisung benötigt wird; wenn die verteilte Energiespeichervorrichtung (S40-S42) eine Leistungseinspeisung benötigt, wird die Einspeisung gestartet; wenn die verteilte Energiespeichervorrichtung (S40-S42) keine Leistungseinspeisung benötigt oder die Elektroenergie nach Abschluss der Elektroenergieeinspeisung in die verteilte Energiespeichervorrichtung (S40-S42) im Energie-Internet immer noch im Überschuss vorhanden ist, wird ein Steuersignal für Elektroenergieverbrauch an das Leistungsstandregelmodul (S64) gesendet.

6. Hierarchisches Steuerungsverfahren nach einem der Ansprüche 1 bis 5, wobei das Energie-Internet ein Energieroutermodul (S8), ein Energieschaltmodul (S12) und ein Energieteilnetzmodul (S18) umfasst, wobei das Energieroutermodul (S8) mindestens einen Energierouter (S9-S11) umfasst; das Energieteilnetzmodul (S18) mindestens ein Energieteilnetz (S19-S29) umfasst; alle Energierouter (S9-S11), Energieschalter (S13-S17) und Energieteilnetze (S19-S29) voneinander unabhängig sind; das Eingangsende des Energierouters (S9-S11) mit einem Verteilernetz (S1) verbunden ist und das Ausgangsende des Energierouters (S9-S11) mit einem Eingangsende des Energieschalters (S13-S17) verbunden ist oder gleichzeitig mit den Eingangsenden einer Vielzahl von Energieschaltern (S13-S17) verbunden ist; das Ausgangsende des Energieschalters (S13-S17) mit einem Energieteilnetz (S19-S29) verbunden ist oder gleichzeitig mit einer Vielzahl von Energieteilnetzen (S19-S29) verbunden ist; wobei das Energieteilnetz mindestens eine verteilte Erzeugung (S38-S39), mindestens eine verteilte Energiespeichervorrichtung (S40-S42) und mindestens eine lokale Last (S44-S45) umfasst; wobei verteilte Erzeugung (S38-S39), die verteilte Energiespeichervorrichtung (S40-S42) und die lokale Last (S44-S45) mit dem Ausgangsende des Energieschalters (S13-S17) verbunden ist, der dem Energieteilnetz (S19-S29) entspricht, zu dem die verteilte Erzeugung (S38-S39), die verteilte Energiespeichervorrichtung (S40-S42) und die lokale Last (S44-S45) gehören, wobei der Energierouter (S9-S11) ferner einen ersten Prozessor (S48) und einen Schwungrad-Leistungsregler (S47) umfassen, wobei der erste Prozessor (S48) dazu dient, die Knotenspannung und den Knotenstrom jeder verteilten Erzeugung (S38-S39) im Energie-Internet, die Knotenspannung und den Knotenstrom jeder lokalen Last (S44-S45) und die Wirkleistung und Blindleistung jeder verteilten Energiespeichervorrichtung (S40-S42) zu erfassen und die Bruttoleistungserzeugung und Bruttolast im Energie-Internet durch das Neuronales-Netz-Verfahren vorherzusagen; das Energiegleichgewicht im Energie-Internet nach den vorhergesagten Werten für die Leistungserzeugung und Last beurteilt wird; wenn das Energiegleichgewicht im Energie-Internet erreicht ist, eine Frequenz-/Spannungsregelanweisung an den entsprechenden Energieschalter gesendet wird; wenn das Energiegleichgewicht im Energie-Internet nicht erreicht ist, beurteilt wird, ob die Elektrizität des Energie-Internets im Überschuss vorhanden ist oder mangelt; wenn die Elektrizität des Energie-Internets mangelt, ein Steuersignal an die verteilte Energiespeichervorrichtung (S40-S42) gesendet wird, um mit der Einspeisung von Elektroenergie in das Energie-Internet zu beginnen; nach Abschluss der Elektroenergieeinspeisung durch die verteilte Energiespeichervorrichtung (S40-S42) und wenn die Elektrizität des Energie-Internets immer noch mangelt, ein Steuersignal an das Verteilernetz gesendet wird, um es zu veranlassen, Elektroenergie in das Energie-Internet einzuspeisen; wenn das Verteilernetz (S1) keine Elektroenergie in das Energie-Internet einspeisen kann oder die Elektrizität des Energie-Internets nach Abschluss der Elektroenergieeinspeisung durch das Verteilernetz (S1) immer noch mangelt, der Schwungrad-Leistungsregler (S47) gestartet wird, um Elektroenergie in das Energie-Internet einzuspeisen; wenn die Elektrizität des Energie-Internets im Überschuss vorhanden ist, ein Steuersignal an die verteilte Erzeugung (S38-S39 gesendet wird, um sie zu veranlassen, Leistung in das Verteilernetz (S1) einzuspeisen; wenn das Verteilernetz (S1) keine Elektroenergieeinspeisung benötigt oder die Elektroenergie im Energie-Internet nach Abschluss der Elektroenergieeinspeisung in das Verteilernetz (S1) immer noch im Überschuss vorhanden ist, die verteilte Energiespeichervorrichtung (S40-S42) eine Antwort gibt, ob sie eine Leistungseinspeisung benötigt; wenn die verteilte Energiespeichervorrichtung (S40-S42) eine Leistungseinspeisung benötigt, die Einspeisung gestartet wird; wenn die verteilte Energiespeichervorrichtung (S40-S42) keine Leistungseinspeisung benötigt oder die Elektroenergie im Energie-Internet nach Elektroenergieeinspeisung in die verteilte Energiespeichervorrichtung (S40-S42) immer noch im Überschuss vorhanden ist, der Schwungrad-Leistungsregler (S47) gestartet wird, um überschüssige Elektroenergie im Energie-Internet zu verbrauchen,

wobei der Energieschalter ferner einen zweiten Prozessor umfasst, der dazu dient, Knotenfrequenz, Spannung, Wirkleistung und Blindleistung jeder verteilten Erzeugung (S38-S39) und der lokalen Last im Energieteilnetz (S19-S29) zu erfassen, das mit dem Energieschalter (S13-S17) verbunden ist, der die Steueranweisung zur Frequenz-/Spannungsregelung annimmt, um die Knotenfrequenz und die Knotenspannung der verteilten Erzeugung (S38-S39) und der lokalen Last (S44-S45) in dem mit dem Energieschalter verbundenen Energieteilnetz (S19-S29) zu regeln, um jede Knotenfrequenz im Einklang mit der Leistungsfrequenz des Verteilernetzes (S1) und jede Knotenspannung im Einklang mit der Nennspannung des Verteilernetzes (S1) zu halten.

**7.** Hierarchisches Steuerungsverfahren nach Anspruch 6, wobei die verteilte Erzeugung (S38-S39), die verteilte Energiespeichervorrichtung (S40-S42) und die lokale Last (S44-S45) mit dem Ausgangsende des Energieschalters (S13-S17), der dem Energieteilnetz (S19-S29) entspricht, zu dem die verteilte Erzeugung (S38-S39), die verteilte Energiespeichervorrichtung (S40-S42) und die lokale Last (S44-S45) gehören, durch Hot-Plug-Schnittstellen (S31-S36) verbunden sind.

**8.** Hierarchisches Steuerungsverfahren nach einem der Ansprüche 6 bis 7, wobei der Energieschalter (S13-S17) ferner klassifiziert ist als:

Energieschalter Typ I (S14, S16), der dazu dient, Energieteilnetze mit verschiedenen Arten von Leistungsverbräuchen zu steuern;
Energieschalter Typ II (S15, S17), der dazu dient, Energieteilnetze mit derselben Art von Leistungsverbrauch zu steuern.

**Revendications**

**1.** Procédé de contrôle utilisant un système de contrôle hiérarchique d'un réseau énergétique, le système de contrôle hiérarchique comprenant :

un module de collecte de données (S54) utilisé pour collecter la fréquence de noeud, la tension de noeud, l'intensité de noeud, la puissance active et la puissance réactive de chaque génération distribuée (S38-S39) et la charge locale (S44-S45) sur le réseau électrique, et la puissance active et la puissance réactive de chaque dispositif de stockage d'énergie distribuée (S40-S42) ;
une unité de prédiction d'énergie (S55) utilisée pour prédire la génération brute d'énergie et la charge brute dans le réseau énergétique ;
un module d'évaluation d'équilibre énergétique (S58) utilisé pour juger l'équilibre énergétique dans le réseau énergétique conformément aux valeurs prédites de génération d'énergie et de charge; quand l'équilibre énergétique n'est pas réalisé dans le réseau énergétique, une instruction de commande correspondante est envoyée dans un module d'évaluation surplus-déficit d'énergie (S62) ; quand l'équilibre énergétique est réalisé dans le réseau énergétique, une instruction de commande correspondante est envoyée à un module de régulation de tension de fréquence (S59) ;
un module d'évaluation surplus-déficit d'énergie (S60) utilisé pour accepter l'instruction de commande envoyée par le module d'évaluation d'équilibre énergétique (S58) pour évaluer si l'électricité dans le réseau énergétique est en surplus ou est insuffisant et envoyer le résultat d'évaluation à une unité de contrôle d'équilibre énergétique ;
une unité de contrôle d'équilibre énergétique (S61) utilisée pour envoyer un signal de commande au dispositif de stockage d'énergie distribuée (S40-S42) ou au réseau de distribution (S1) pour lui faire fournir de l'énergie électrique au réseau électrique quand l'électricité dans le réseau électrique est insuffisante, ou envoyer un signal de commande d'alimentation en énergie électrique à un module de régulation de l'état énergétique (S64) une fois que le dispositif de stockage d'énergie distribuée (S40-S42) et le réseau de distribution (S1) ont réalisé l'alimentation en énergie électrique ; ou utilisée pour envoyer un signal de commande à la génération distribuée (S38-S39) pour lui faire fournir de l'énergie au réseau de distribution (S1) ou au dispositif de stockage d'énergie distribuée (S40-S42) quand l'électricité dans le réseau énergétique est en surplus, ou envoyer un signal de commande de consommation d'énergie électrique au module de régulation de l'état énergétique (S64) quand le réseau de distribution (S1) ne fournit pas d'énergie électrique et quand le dispositif de stockage d'énergie distribuée (S40-S42) est plein ;
un module de régulation de l'état énergétique (S64) utilisé pour accepter le signal de commande d'alimentation en énergie électrique ou le signal de commande de consommation d'énergie électrique et envoyer un signal de commande correspondant au régulateur de puissance à volant (S47) pour lui faire fournir de l'énergie électrique au réseau électrique ou consommer de l'énergie électrique excédentaire dans le réseau électrique ; un module de régulation de tension de fréquence (S59) utilisé pour accepter l'instruction de commande du module d'évaluation d'équilibre énergétique (S58) et réguler la fréquence et la tension de noeud de chaque génération distribuée (S38-S39) correspondante et la charge locale dans le sous-réseau d'énergie pour maintenir chaque fréquence de noeud cohérente avec la fréquence de puissance du réseau de distribution (S1) et chaque tension de noeud cohérente avec la tension d'étalonnage du réseau de distribution (S1),
et où le procédé de contrôle comprend les étapes suivantes :

Étape 1 : Collecter des données comprenant la fréquence de noeud, la tension de noeud, l'intensité de noeud, la puissance active et la puissance réactive de chaque génération distribuée (S38-S39) et la charge locale (S44-S45) sur le réseau électrique, et la puissance active et la puissance réactive de chaque dispositif de stockage d'énergie distribuée (S40-S42) ;

Étape 2 : Prédire la génération brute d'énergie et la charge brute dans le réseau énergétique par la méthode du réseau neutre en fonction de l'intensité de noeud et de la tension de noeud de chaque génération distribuée (S38-S39) et la charge locale (S44-S45) ;

Étape 3 : Évaluer si la valeur prédite pour la génération brute d'énergie est égale à celle pour la charge brute dans le réseau énergétique : si oui, elle indique l'équilibre énergétique dans le réseau énergétique, alors passer à l'étape 7 ; sinon, elle indique un déséquilibre énergétique dans le réseau énergétique, alors passer à l'étape 4 ;

Étape 4 : Évaluer si la valeur prédite pour la génération brute d'énergie est inférieure à celle pour la charge brute dans le réseau énergétique : si oui, l'électricité dans le réseau énergétique est insuffisante, alors passer à l'étape 5 ; sinon, l'électricité dans le réseau énergétique est en surplus, alors passer à l'étape 6 ;

Étape 5 : Fournir de l'énergie électrique au réseau énergétique jusqu'à obtention de l'équilibre énergétique dans le réseau énergétique, puis passer à l'étape 7 ;

Étape 6 : Allouer le surplus d'énergie électrique dans le réseau énergétique jusqu'à obtention de l'équilibre énergétique dans le réseau énergétique, puis passer à l'étape 7 ;

Étape 7 : Réguler la fréquence et la tension de noeud de la génération distribuée (S38-S39) et de la charge locale (S44-S45) dans le sous-réseau énergétique correspondant pour maintenir chaque fréquence de noeud cohérente avec la fréquence d'alimentation du réseau de distribution (S1) et chaque tension de noeud cohérente avec la tension d'étalonnage du réseau de distribution (S1), **caractérisé en ce que** l'étape 7 comprend les étapes suivantes :

Étape 7.1 : Calculer les erreurs $e_{f,i}$, $e_{v,i}$ entre la fréquence de noeuds et la tension de noeud de chaque appareil dans le sous-réseau énergétique et la puissance d'alimentation et la tension d'étalonnage du réseau de distribution (S1) par l'algorithme de consensus multi-agent, comme figuré par les formules suivantes :

$$e_{f,i}(t) = \sum_{j=1}^{n} a_{ij}\left[ f_i(t) - f_j(t) \right] + \left[ f_i(t) - f_0(t) \right]$$

$$e_{v,i}(t) = \sum_{j=1}^{n} a_{ij}\left[ V_i(t) - V_j(t) \right] + \left[ V_i(t) - V_0(t) \right] \tag{1}$$

où l'appareil comprend des générations distribuées (S38-S39) et des charges locales (S44-S45) dans le sous-réseau énergétique ; $f_i(t)$ et $f_j(t)$ sont respectivement la fréquence du noeud d'appareil i et la fréquence du noeud d'appareil j ; $V_i(t)$ et $V_j(t)$ sont respectivement la tension du noeud d'appareil i et la tension du noeud d'appareil j ; t représente le temps ; $a_{ij}$ représente le poids de connexion entre le noeud d'appareil i et le noeud d'appareil j ; s'il y a une voie de connexion entre le noeud d'appareil i et le noeud d'appareil j, alors $a_{ij} = 1$ ; sinon, $a_{ij} = 0$ ; $f_0$ est la valeur de fréquence de référence fournie par l'interrupteur énergétique, c'est-à-dire la fréquence de puissance du réseau de distribution (S1); $V_0$ est la tension fournie par l'interrupteur énergétique, c'est-à-dire la tension d'étalonnage du réseau de distribution (S1) .

Étape 7.2 : Calculer les valeurs de référence du la fréquence de noeud et le tension de noeud en utilisant la valeur d'erreur $e_{f,i}$ de la fréquence de noeud et la valeur d'erreur $e_{v,i}$ de la tension de noeud, obtenus à l'étape 7.1, comme figuré dans les formules suivantes :

$$D_i(P)\dot{\theta}_i = P_0 - \sum_{j=1}^{n} V_i V_j |Y_{ij}| \sin(f_i - f_j) + u_{f,i}(t)$$

$$\tau_i \dot{E}_i = -\tilde{C}_i(V_i - V_i^*) + \sum_{j=1}^{n} V_i V_j |Y_{ij}| \cos(f_i - f_j) + u_{v,i}(t) \qquad (2)$$

où $u_{f,i}(t) = e_{f,i}(t)$, et $u_{v,i}(t) = e_{v,i}(t)$

$$D_i = 1/n_i,$$

$$\ddot{\theta}_i = f_i - f_i^*,$$

$P_0$ est la puissance active du noeud d'instrument du réseau de distribution (S1),
$f_i^*$, $V_i^*$ sont respectivement les valeurs de référence de fréquence et de tension de noeud d'appareil,
$Y_{ij}$ est l'admittance entre le noeud d'appareil i et le noeud d'appareil j,

$$\tau_i > 0,$$

$$\dot{E}_i = E_i - E_i^*,$$

et

$$\check{C}_i = n_i^{-1}$$

Étape 7.3 : Substituer la valeur de référence $f_i^*$ de fréquence de noeud et la valeur de référence $V_i^*$ de tension de noeud, obtenues à l'étape 7.2, dans l'équation de commande de statisme suivie par chaque appareil dans le sous-réseau énergétique pour calculer la puissance active $P_{e,i}$ et la puissance réactive $Q_{e,i}$ quand la fréquence et la tension de noeud de chaque appareil de chaque appareil sont respectivement les valeurs de référence ; les équations de commande de statisme sont comme suit :

$$f_i^* = f_0 - m_i(P_{e,i} - P_0) \qquad (3)$$

$$V_i^* = V_0 - n_i(Q_{e,i} - Q_0)$$

où $Q_0$ est la puissance réactive de chaque noeud d'appareil dans le sous-réseau énergétique à la tension d'étalonnage du réseau de distribution (S1), et $m_i$, $n_i$ sont respectivement les coefficients caractéristiques de statisme de fréquence active et de tension réactive.

Étape 7.4 : Régler la puissance active et la puissance réactive de chaque noeud d'appareil dans le sous-réseau énergétique jusqu'à ce que la puissance active soit $P_{e,i}$ et la puissance réactive soit $Q_{e,i}$.

Étape 7.5 : Évaluer si la fréquence de noeud et la tension de noeud de chaque noeud d'appareil dans le sous-réseau énergétique sont cohérentes avec la fréquence de puissance et la tension d'étalonnage du réseau de distribution (S1) ; sinon, répéter les étapes 7.1 à 7.5 jusqu'à ce que la fréquence et la tension de noeud de chaque noeud d'appareil dans le sous-réseau énergétique soient cohérentes avec la fréquence de puissance et la tension d'étalonnage du réseau de distribution (S1).

2. Procédé de contrôle hiérarchique du réseau énergétique selon la revendication 1 dans lequel, à l'étape 5, de l'énergie électrique est fournie au réseau énergétique suivant les étapes spécifiques suivantes :

Étape 5.1 : Calculer l'insuffisante électrique initiale du réseau énergétique, c'est-à-dire la différence $W_E = W_L$

- $W_G$ entre la valeur prédite $W_L$ de la charge brute de la charge locale (S44-S45) et la valeur prédite $W_G$ de la génération de puissance brute de la génération distribuée (S38-S39) dans le réseau énergétique, et envoyer un signal de commande à chaque dispositif de stockage d'énergie distribuée (S40-S42) dans le réseau énergétique pour démarrer le dispositif de stockage d'énergie distribuée (S40-S42) afin qu'il fournisse de l'énergie électrique au réseau énergétique ; en partant du principe que l'électricité fournie soit .

Étape 5.2 : Évaluer si l'énergie électrique dans le réseau énergétique reste insuffisante après que le dispositif de stockage d'énergie distribuée (S40-S42) ait fourni de l'énergie électrique, c'est-à-dire si $W_{StorageE} > 0$, où $W_{StorageE} = W_E - W_{Storage}$ ; si oui, envoyer un signal de commande au réseau électrique (S1) pour lui faire fournir de l'énergie électrique au réseau énergétique, et en présumant que l'électricité fournie est $W_{Grid-Storage}$ ; sinon, passer à l'étape 7.

Étape 5.3 : Évaluer si l'énergie électrique dans le réseau énergétique reste insuffisante après que la fourniture d'énergie électrique au réseau de distribution (S1) a été effectuée, c'est-à-dire si $W_{Grid-StorageE} > 0$, où $W_{Grid-StorageE} = W_{StorageE} - W_{Grid-Storage}$ ; si oui, envoyer un signal de commande au régulateur de puissance à volant (S47) pour lui faire fournir de l'énergie électrique au réseau électrique, puis passer à l'étape 7 quand l'électricité fournie est $W_{Grid-StorageE}$ ; sinon, passer à l'étape 7.

**3.** Procédé de contrôle hiérarchique du réseau énergétique selon l'une quelconque des revendications 1 ou 2 dans lequel, à l'étape 6, le surplus d'énergie électrique dans le réseau énergétique est alloué suivant les étapes spécifiques suivantes :

Étape 6.1 : Calculer le surplus d'électricité initial du réseau énergétique, c'est-à-dire la différence $W_S = W_G - W_L$ entre $W_G$ et $W_L$.

Étape 6.2 : Laisser le réseau de distribution (S1) produire une réponse quant à savoir s'il faut fournir de l'énergie électrique ; si oui, faire alimenter le réseau de distribution (S1) au réseau énergétique, puis passer à l'étape 6.3 ; sinon, passer à l'étape 6.4 ;

Étape 6.3 : Évaluer si l'énergie électrique est encore en surplus après alimentation de l'énergie électrique au réseau de distribution (S1), c'est-à-dire si $W_{SG} > 0$, où $W_{SG} = W_S - W_{Grid}$, et $W_{Grid}$ est l'électricité fournie au réseau de distribution (S1) ; si oui, passer à l'étape 6.4 ; sinon, passer à l'étape 7.

Étape 6.4 : Calculer l'état de charge SOC du dispositif de stockage d'énergie distribuée (S40-S42) dans le réseau énergétique ; si SOC = 1, le dispositif de stockage d'énergie distribuée (S40-S42) est rempli d'énergie, alors passer à l'étape 6.6 ; sinon, fournir de l'énergie au dispositif de stockage d'énergie distribuée (S40-S42), en présumant que l'électricité fournie est $W_{SStorage}$, puis passer à l'étape 6.5.

Étape 6.5 : Évaluer si l'énergie électrique est encore en surplus dans le réseau énergétique après alimentation de l'énergie électrique au dispositif de stockage d'énergie distribuée (S40-S42), c'est-à-dire si $W_{SS} > 0$, où si l'étape 6.3 n'a pas été effectuée, alors $W_{SS} = W_S - W_{SStorage}$, et si l'étape 6.3 a été effectuée, $W_{SS} = W_{SG} - W_{SStorage}$ ; si oui, passer à l'étape 6.6 ; sinon, passer à l'étape 7.

Étape 6.6 : Faire consommer au régulateur de puissance à volant (S47) l'énergie électrique en excès dans le réseau énergétique jusqu'à obtention de l'équilibre énergétique dans le réseau énergétique, puis passer à l'étape 7.

**4.** Procédé de contrôle hiérarchique du réseau énergétique selon l'une quelconque des revendications 1 à 3, dans lequel l'unité de prédiction d'énergie comprend en outre :

un module de prédiction de génération d'énergie, utilisé pour prédire la génération d'énergie brute dans le réseau énergétique par la méthode du réseau neuronal en fonction de la tension et de l'intensité de noeud de chaque génération distribuée (S38-S39) ;

un module de prédiction de charge (S57) utilisé pour prédire une charge brute dans le réseau énergétique par la méthode du réseau neuronal en fonction de la tension et de l'intensité de noeud de chaque charge locale (S44-S45).

**5.** Procédé de contrôle hiérarchique du réseau énergétique selon l'une quelconque des revendications 1 à 4, dans lequel l'unité de contrôle d'équilibre énergétique comprend en outre :

un module de contrôle d'alimentation en électricité insuffisante (62) utilisé pour envoyer un message de commande au dispositif de stockage d'énergie distribuée (S40-S42) pour lui faire démarrer une alimentation en énergie électrique quand l'électricité dans le réseau énergétique est insuffisante ; si l'électricité dans le réseau énergétique reste insuffisante après alimentation en énergie électrique par le dispositif de stockage d'énergie distribuée (S40-S42), le module de contrôle d'alimentation en électricité insuffisante (62) envoie un signal de command au réseau de distribution (S1) pour lui faire fournir de l'énergie au réseau énergétique; si le réseau de distribution (S1) ne peut pas fournir d'énergie au réseau énergétique ou si l'électricité dans le réseau énergétique reste insuffisant après que le réseau de distribution ait fourni de l'énergie électrique, un signal de commande d'alimentation en énergie électrique est envoyé au module de régulation de l'état énergétique (S64) ; un module de commande d'allocation d'électricité en surplus (S63) utilisé pour envoyer un signal de commande à la génération distribuée (S38-S39) pour lui faire fournir de l'énergie au réseau de distribution (S1) quand l'électricité est en surplus dans le réseau énergétique ; si le réseau de distribution (S1) n'a pas besoin d'une alimentation en énergie électrique ou si l'énergie électrique reste en surplus dans le réseau énergétique après alimentation d'énergie électrique au réseau de distribution (S1), le dispositif de stockage d'énergie distribuée (S40-S42) répond quant à savoir s'il faut fournir de l'énergie ; si le dispositif de stockage d'énergie distribuée (S40-S42) a besoin d'une alimentation en énergie, l'alimentation démarre ; si le dispositif de stockage d'énergie distribuée (S40-S42) n'a pas besoin d'une alimentation en énergie ou si l'énergie électrique est toujours en surplus dans le réseau énergétique après fourniture d'énergie électrique au dispositif de stockage d'énergie distribuée (S40-S42), un signal de commande de consommation d'énergie électrique est envoyé au module de régulation de l'état énergétique (S64) .

6. Procédé de contrôle hiérarchique du réseau énergétique selon l'une quelconque des revendications 1 à 5, dans lequel ledit réseau énergétique comprend un module de routage d'énergie (S8), un module commutateur de puissance (S12) et un module sous-réseau d'énergie (S18),

le module de routage d'énergie (S8) comprenant au moins un routeur d'énergie (S9-S11) ; le module commutateur de puissance (S12) comprenant au moins un commutateur de puissance (S13-S17) ; le module sous-réseau d'énergie (S18) comprenant au moins un sous-réseau d'énergie (S19-S29) ; tous les routeurs d'énergie (S9-S11), commutateur de puissance (S13-S17) et sous-réseaux d'énergie (S19-S29) sont indépendants les uns des autres ; l'extrémité d'entrée du routeur d'énergie (S9-S11) est connectée au réseau de distribution (S1), et l'extrémité de sortie du routeur d'énergie (S9-S11) est connectée à une extrémité d'entrée du commutateur de puissance (S13-S17) ou est connectée simultanément aux extrémités d'entrée de plusieurs commutateurs de puissance (S13-S17) ; l'extrémité de sortie du commutateur de puissance (S13-S17) est connectée à un sous-réseau d'énergie (S19-S29) ou est connectée simultanément à plusieurs sous-réseaux d'énergie (S19-S29) ; le sous-réseau d'énergie comprenant au moins une génération distribuée (S38-S39) et au moins une charge locale (S44-S45) ; la génération distribuée (S38-S39), le dispositif de stockage d'énergie distribuée (S40-S42) et la charge locale (S44-S45) étant connectée à l'extrémité de sortie du commutateur de puissance (S13-S17) correspondant au sous-réseau d'énergie (S19-S29) auquel appartiennent la génération distribuée (S38-S39), le dispositif de stockage d'énergie distribuée (S40-S42) et la charge locale (S44-S45) ; le routeur d'énergie (S9-S11) comprenant en outre un premier processeur (S48) et un régulateur de puissance à volant (S47), où le premier processeur (S48) est utilisé pour collecter la tension et l'intensité de noeud de chaque génération distribuée (S38-S39) dans le réseau énergétique, la tension et l'intensité de noeud de chaque charge locale (S44-S45) et la puissance active et la puissance réactive de chaque dispositif de stockage d'énergie distribuée (S40-S42), et pour prédire la génération de puissance brute et la charge brute dans le réseau énergétique par la méthode du réseau neuronal ; l'équilibre énergétique dans le réseau énergétique est évalué en fonction des valeurs prédites de génération de puissance et de charge ; quand l'équilibre énergétique est obtenu dans le réseau énergétique, une instruction de commande de régulation de tension de fréquence est envoyée à l'interrupteur de puissance correspondant ; quand l'équilibre énergétique n'est pas obtenu dans le réseau énergétique, on détermine si l'électricité dans le réseau énergétique est en surplus ou insuffisant ; quand l'électricité dans le réseau énergétique est insuffisante, un signal de commande est envoyé au dispositif de stockage d'énergie distribuée (S40-S42) pour lui faire fournir de l'énergie électrique au réseau énergétique ; une fois que le dispositif de stockage d'énergie distribuée (S40-S42) fournit de l'énergie électrique et si l'électricité du réseau énergétique reste insuffisante, un signal de commande est envoyé au réseau de distribution pour lui faire fournir de l'énergie électrique au réseau énergétique ; si le réseau de distribution (S1) ne peut pas fournir d'énergie au réseau énergétique ou si l'électricité du réseau énergétique reste insuffisante après que le réseau de distribution (S1) a fourni l'énergie électrique, le régulateur de puissance à volant (S47) démarre pour fournir de l'énergie électrique au réseau énergétique ; quand l'électricité du réseau énergétique est en surplus, un signal de commande est envoyé à la génération distribuée (S38-S39) pour lui faire fournir de l'énergie au réseau de distribution (S1) ; si le réseau de distribution (S1) n'a pas besoin d'alimentation en énergie électrique ou si l'énergie électrique reste en surplus dans le réseau énergétique après alimentation en énergie électrique au réseau de distribution (S1), le dispositif de stockage d'énergie distribuée (S40-S42) répond quant à savoir s'il faut une alimentation en énergie ; si le dispositif de stockage d'énergie distribuée (S40-S42) a besoin d'une alimentation en énergie, il reçoit une alimentation ; si le dispositif de stockage d'énergie distribuée (S40-S42) n'a pas besoin d'une alimentation en énergie ou si l'énergie électrique reste en surplus dans le réseau énergétique après alimentation en énergie électrique du dispositif de stockage d'énergie distribuée (S40-S42), le régulateur de puissance à volant (S47) démarre pour consommer l'énergie électrique en excès dans le réseau énergétique ; le commutateur de puissance comprend en outre un deuxième processeur utilisé pour collecter la fréquence de noeud, la tension de noeud, la puissance active et la puissance réactive de chaque génération distribuée (S38-S39) et la charge locale dans le sous-réseau énergétique (S19-S29) connecté au commutateur de puissance (S13-S17), accepter l'instruction de commande de régulation de tension de fréquence pour réguler la fréquence de noeud et à la tension de noeud de la génération distribuée (S38-S39) et de la charge locale (S44-S45) dans le sous-réseau énergétique (S19-S29) connecté au commutateur de puissance pour maintenir chaque fréquence de noeud cohérente avec la fréquence de puissance du réseau de distribution (S1) et chaque tension de noeud cohérente avec la tension d'étalonnage du réseau de distribution (S1).

7. Procédé de contrôle hiérarchique du réseau énergétique selon la revendication 6, dans lequel la génération distribuée (S38-S39), le dispositif de stockage d'énergie distribuée (S40-S42) et la charge locale (S44-S45) sont connectés à l'extrémité externe du commutateur de puissance (S13-S17) correspondant au sous-réseau d'énergie (S19-S29) auquel appartiennent la génération distribuée (S38-S39), le dispositif de stockage d'énergie distribuée (S40-S42) et la charge locale (S44-S45) à travers des interfaces hotplugs (S31-S36).

8. Procédé de contrôle hiérarchique du réseau énergétique selon l'une quelconque des revendications 6 ou 7, dans lequel le commutateur de puissance (S13-S17) est en outre classé en :

commutateur de puissance de type I (S14, S16) utilisé pour contrôler les sous-réseaux d'énergie avec différentes sortes de consommations énergétiques ;
commutateur de puissance de type II (S15, S17) utilisé pour contrôler les sous-réseaux d'énergie avec la même sorte de consommation énergétique.

EP 3 057 192 B1

FIG. 1

26

FIG. 2

FIG. 3

Begin

Collect data

Predict the gross power generation and gross load in the energy internet to obtain the predicted value $W_G$ for gross power generation and the predicted value $W_L$ for gross load

Yes — $W_G = W_L$ — No

$W_G < W_L$ — No

Yes

Send the value $W_E$ of insufficient electric energy to each distributed energy storage device in the energy internet, and start the distributed energy storage device to supply power to the adjacent corresponding load

No — Judge whether the electric energy is still insufficient in the energy internet — Yes

Send the value $W_{StorageE}$ of insufficient electric energy to the distribution grid, and make the power distribution network supply electric energy $W_{Grid-Storage}$

No — Judge whether the electric energy is insufficient in the energy internet — Yes

Make the flywheel power regulator supply electric energy $W_{StorageE} - W_{Grid-Storage}$ to the energy internet

Judge whether the distribution grid needs supply of electric energy — No

Yes

Make the energy internet supply power to the distribution grid

Judge whether the electric energy is surplus in the energy internet — Yes — Judge whether the State of Charge of the distributed energy storage device in the energy internet $SOC = 1$ — No — Supply power to each distributed energy storage device in the energy internet

No

Yes

Make the flywheel power regulator consume excess electric energy in the energy internet — Yes — Judge whether the electric energy is surplus in the energy internet — No

Regulate the node frequency and node voltage of the distributed generation and local load in the corresponding energy subnet to keep each node frequency consistent with the power frequency of the power distribution network and each node voltage consistent with the rated voltage of the distribution grid

End

Fig. 4

FIG. 5

FIG. 6

FIG. 7

FIG. 8

Calculate the errors between node frequency and node voltage of each device and the power frequency and rated voltage of the distribution grid by the multi-agent consensus algorithm

Calculate the reference values of the device node frequency and the device node voltage respectively

Substitute the reference values of device node frequency and node voltage into the drooping control equation followed by each device in the energy subnet to calculate the active power $P_{e,i}$ and the reactive power $Q_{e,i}$ corresponding to node frequency and node voltage of each device which are respectively reference values;

Regulate the active power and reactive power of each device node in the energy subnet until the active power is $P_{e,i}$ and the reactive power is $Q_{e,i}$

Judge whether the node frequency and node voltage of each device node in the energy subnet are consistent with the power frequency and rated voltage of the distribution grid

No

Yes

End

FIG. 9

FIG. 10

FIG. 11

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A Q HUANG et al.** The Future Renewable Electric Energy Delivery and Management (FREEDM) System: The Energy Internet. *PROCEEDINGS OF THE IEEE.,* 01 January 2011, vol. 99 (1), 133-148